# EUROPEAN PATENT SPECIFICATION

(11) **EP 1 598 730 B1**
(45) Date of publication and mention of the grant of the patent: **08.04.2009**
(21) Application number: 05000129.6
(22) Date of filing: 05.01.2005
(51) Int. Cl.: G06F 1/16, H04M 1/247, H04M 1/274

(54) **System and method for supporting input confirmation in mobile terminal device**
System und Verfahren für das Stützen einer Eingangsbestätigung in einer beweglichen Terminalvorrichtung
Système et méthode pour soutenir la confirmation d'entrée dans un dispositif terminal mobile

(30) Priority: 06.01.2004 JP 2004001516
(43) Date of publication of application: 23.11.2005
(73) Proprietor: NEC CORPORATION, Tokyo (JP)
(72) Inventor: Torii, Kuniaki, Tokyo (JP)
(74) Representative: Vossius & Partner

(56) References cited:
- DE-A1- 4 140 780
- DE-A1- 10 154 643
- US-A- 6 067 081
- US-A1- 2002 149 561
- "NOKIA USER'S GUIDE" NOKIA 2110 USER'S GUIDE, NOKIA, HELSINKI, FI, no. 6, 1996, pages 1-100, XP000962431

## Description

The present invention relates to mobile terminal devices and, more particularly, to a system and method for supporting input confirmation in a mobile terminal device to reduce the load of visually confirming input information.

In known mobile terminals each including input means having a plurality of multiple character keys, to realize efficient character input in entering many characters using limited keys, the mobile terminal further includes notification means (a vibrator, a vibrator driving IC, and an MPU) as disclosed in, for example, JP-A-2002-229716. A user presses a multiple character key a predetermined number of times to sequentially replace a character with the next one of a character group assigned to the key. When the last character is replaced with the top character in a cyclic manner, the notification means notifies the user of the fact using a vibrator.

In the above-mentioned known mobile terminal, if the user misses a target character included in one character group assigned to a certain character key, the user presses the same key multiple times so that the top character of the group appears on a screen of the mobile terminal. When the top character appears on the screen, the notification means notifies the user of the fact. Since the user can recognize the top character, the user presses the character key a predetermined number of times to input the target character.

Many mobile terminal devices such as cellular telephones, PHSs (personal handyphone systems), and PDAs (personal data assistances or personal digital assistants) are commonly used as practical tools, which are always taken on the road. The user composes an electronic mail (e-mail) message or surfs the Web using the mobile terminal device simultaneously with another action, e.g., walking.

When inputting characters in the mobile terminal device during walking through a crowd, the user has to pay attention to a screen of the mobile terminal device and the crowd. Accordingly, the user often changes their view, thus resulting in a decrease in walking speed and character input speed. In addition, it also results in an increase of the risk of coming into collision with other walkers.

According to a current common input method depending on visual confirmation in a screen, when the user inputs characters simultaneously with another action such as walking, the efficiencies of character input and the other action are decreased. In addition, since the user's attention is scattered, disadvantageously, the safety of the other action may be reduced.

The mobile terminal device disclosed in JP-A-2002-229716 is based on the current common input method depending on visual confirmation. However, a target character can be input without depending on visual confirmation. In other words, the user presses a character key until the notification means generates vibration to notify the user that the top character appears in the screen. The user recognizes the top character by the vibration and then presses the key a predetermined number of times to replace the character with another one, thus inputting the target character. Thus, the user can input the target character without depending on visual confirmation.

Japanese syllabary is commonly represented as a table of rows and columns. Each column (hereinbelow, also referred to as a group) may have up to five characters (syllables) corresponding to the five Japanese vowels.

In the mobile terminal device disclosed in JP-A-2002-229716, for example, it is assumed that a target character is Japanese hiragana character " 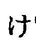 ", the user inputs the hiragana character " 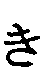 " using a character key assigned to the group of " 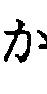 " as a top character, and the user forgets the entry of the character " 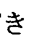 ". To input the target character without depending on visual confirmation, the user presses the character key until the notification means generates vibration to notify the user that the top character " 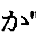 " appears in the screen. After the user recognizes the top character " 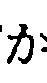 " by the vibration, the user presses the key three times to input the target character " 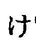 ".

Essentially, after the character " 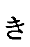 " is entered, the target character " 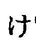 " appears in the screen by two presses of the character key. However, since the user inputs characters without depending on visual confirmation, the user has to press the key four times until the notification means generates vibration. After the user recognizes the top character " 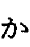 ", the user has to further press the key three times until the target character " 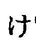 " appears. The user has to press the key seven times in total.

In addition, to recognize the top character, since the user does not know how many times the user presses the key until the notification means generates vibration, disadvantageously, the user has to determine whether vibration is generated every pressing the key.

In the known mobile terminals, therefore, to compose an e-mail message or surfing the Web simultaneously with another action such as walking, disadvantageously, the number of times of pressing a character key is increased. In addition, in recognizing the top character, it is complicated to confirm notification every pressing the character key.

US 2002/0149561 A1 discloses an electronic apparatus vibration generator, vibratory informing method and method for controlling information. An electronic device drives an oscillatory actuator to cause generation of vibration when it is detected that an operation input to a touch panel or operation key has been received.

Accordingly, in consideration of the above disadvantages, it is an object of the present invention to provide a system and method for supporting input confirmation in a mobile terminal device to reduce the load of visually confirming input information and support character input during action such as walking.

The object of the invention is achieved with the features of the claims.

The present invention provides a system for supporting input confirmation in a mobile terminal device in which information is input using a plurality of keys. The system comprises: an information storage unit for storing various groups of information pieces, the groups being assigned to the plurality of keys, respectively, the information piece of each group being sequentially changed in a cyclic manner every pressing the corresponding key; an information position storage unit for storing positions to identify the information pieces of the respective groups stored in the information storage unit; a reaction unit for performing reaction corresponding to each position stored in the information position storage unit; and an input confirmation support unit for reading a position corresponding to an input information piece and allowing the reaction unit to perform reaction corresponding to the read position when one key is pressed to input the information piece.

In one aspect, the invention is a system for supporting input confirmation in a mobile terminal device in which information is input using a plurality of keys including "0" to "9" keys, a "Communication" key, and a "#" key. The system comprises: a character storage unit for storing groups of Japanese hiragana characters, the groups being assigned to the "0" to "9" keys, respectively, each character being input in association with the press of the corresponding key, the character of each group being sequentially changed in a cyclic manner every pressing the corresponding key, the size of the character being changed between full-size and small versions every pressing the "Communication" key as a representative key so long as the size of the character is changeable, the addition of a Japanese diacritic mark (the dakuten or the handakuten) to the character being changed every pressing the "#" key as a representative key so long as the addition of the diacritic mark to the character is permissible; a character basic position storage unit for storing position values 0 to 4 to identify the hiragana characters of each group stored in the character storage unit; a character size position storage unit for storing position values 0 to 2, the size of each hiragana character being identified based on the position value 0 indicating that the character is independent of the change between the full-size and small versions, the position value 1 indicating that the character is changeable to the small version, or the position value 2 indicating that the character is changeable to the full-size version; a diacritic mark position storage unit for storing position values 0 to 2, the addition of the dakuten or the handakuten to each hiragana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible; and a vibration unit for generating vibration as reaction the number of times corresponding to each of the position values stored in the character basic position storage unit, the character size position storage unit, and the diacritic mark position storage unit. The system further includes an input confirmation support unit for reading a position value corresponding to input character information from the character basic position storage unit, the character size position storage unit, or the diacritic mark position storage unit and allows the vibration unit to generate vibration as reaction the number of times corresponding to the position value when any one of the "0" to "9" keys, the "Communication" key, and the "#" key is pressed to enter hiragana character input information, character size change information, or change information regarding the addition of the dakuten or the handakuten.

In another aspect, the invention comprises a system for supporting input confirmation in a mobile terminal device in which information is input using a plurality of keys including "0" to "9" keys, a "Communication" key, and a "#" key. The system comprises: a character storage unit for storing groups of Japanese katakana characters, the groups being assigned to the "0" to "9" keys, respectively, each character being input in association with the press of the corresponding key, the character of each group being sequentially changed in a cyclic manner every pressing the corresponding key, the size of the character being changed between full-size and small versions every pressing the "Communication" key as a representative key so long as the size of the character is changeable, the addition of a Japanese diacritic mark (the dakuten or the handakuten) to the character being changed every pressing the "#" key as a representative key so long as the addition of the diacritic mark to the character is permissible; a character basic position storage unit for storing position values 0 to 4 to identify the katakana characters of each group stored in the character storage unit; a character size position storage unit for storing position values 0 to 2, the size of each katakana character being identified based on the position value 0 indicating that the character is independent of the change between the full-size and small versions, the position value 1 indicating that the character is changeable to the small version, or the position value 2 indicating that the character is changeable to the full-size version; and a diacritic mark position storage unit for storing position values 0 to 2, the addition of the dakuten or the handakuten to each katakana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible. The system further includes: a vibration unit for generating vibration as reaction the number of times corresponding to each of the position values stored in the character basic position storage unit, the character size position storage unit, and the diacritic mark position storage unit; and an input confirmation support unit for reading a position value corresponding to input character information from the character basic position storage unit, the character size position storage unit, or the diacritic mark position storage unit and allowing the vibration unit to generate vibration as reaction the number of times corresponding to the position value when any one of the "0" to "9" keys, the "Communication" key, and the "#" key is pressed to enter katakana character input information, character size change information, or change information regarding the addition of the dakuten or the handakuten.

In a yet another aspect, invention provides a system for supporting input confirmation in a mobile terminal device in which information is input using a plurality of keys including "0" to "9" keys and a "Communication" key. The system comprises: a character storage unit for storing groups of letters of the alphabet, each group consisting of three or four alphabetic characters, the groups being assigned to the "0" to "9" keys, respectively, each character being input in association with the press of the corresponding key, the character of each group being sequentially changed in a cyclic manner every pressing the corresponding key, the size of the character being changed between upper and lower cases every pressing the "Communication" key as a representative key; a character basic position storage unit for storing position values 0 to 2 or 0 to 3 to identify three or four characters of each group stored in the character storage unit; and a character size position storage unit for storing position values 1 and 2, the size of each character being identified based on the position value 1 indicating that the character is changeable to the lower case or the position value 2 indicating that the character is changeable to the upper case. The system further comprises a vibration unit for generating vibration as reaction the number of times corresponding to each of the position values stored in the character basic position storage unit and the character size position storage unit; and an input confirmation support unit for reading a position value corresponding to input character information from the character basic position storage unit or the character size position storage unit and allowing the vibration unit to generate vibration as reaction the number of times corresponding to the position value when any one of the "0" to "9" keys and the "Communication" key is pressed to enter alphabetic character input information or character size change information.

In a further aspect, the invention provides a system for supporting input confirmation in a mobile terminal device in which information is input using a plurality of keys including "0" to "9" keys, a "Communication" key, a "#" key, and an "*" key. The system comprises: a character storage unit for storing groups of Japanese hiragana characters and groups of Japanese katakana characters, the groups of each of the hiragana and katakana characters being assigned to the "0" to "9" keys, respectively, each character being input in association with the press of the corresponding key, the character of each group being sequentially changed in a cyclic manner every pressing the corresponding key, the size of the character being changed between full-size and small versions every pressing the "Communication" key as a representative key so long as the size of the character is changeable, the addition of a Japanese diacritic mark (the dakuten or the handakuten) to the character being changed every pressing the "#" key as a representative key so long as the addition of the diacritic mark to the character is permissible, groups of letters of the alphabet, each group consisting of three or four alphabetic characters, the groups being assigned to the "0" to "9" keys, respectively, each character being input in association with the press of the corresponding key, the character of each group being sequentially changed in a cyclic manner every pressing the corresponding key, each character being changed between upper and lower cases every pressing the "Communication" key, numerals "0" to "9" assigned to the "0" to "9" keys, respectively, each numeral being input in association with the press of the corresponding key, and five symbols assigned to the "*" key as a representative key, each symbol being input in association with the press of the "*" key, the symbol being sequentially changed in a cyclic manner every pressing the "*" key. The system includes a character basic position storage unit for storing position values 0 to 4 to identify the hiragana and katakana characters of each group and the five symbols, position values 0 to 2 or 0 to 3 to identify three or four alphabetic characters of each group, and a position value 0 to identify the numerals, the hiragana, katakana, alphabetic characters, the symbols, and the numerals being stored in the character storage unit;
a character size position storage unit for storing position values 0 to 2, the size of each character being identified based on the position value 0 indicating that the hiragana or katakana character is independent of the change between the full-size and small versions, the position value 1 indicating that the character is changeable to the small version (lower case), or the position value 2 indicating that the character is changeable to the full-size version (upper case); a diacritic mark position storage unit for storing position values 0 to 2, the addition of the dakuten or the handakuten to each hiragana or katakana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible. The system further comprises: a vibration unit for generating vibration as reaction the number of times corresponding to each of the position values stored in the character basic position storage unit, the character size position storage unit, and the diacritic mark position storage unit; and an input confirmation support unit for reading a position value corresponding to input character information from the character basic position storage unit, the character size position storage unit, or the diacritic mark position storage unit and allowing the vibration unit to generate vibration as reaction the number of times corresponding to the position value when any one of the "0" to "9" keys, the "Communication" key, the "#" key, and the "*" key is pressed to enter input information of a hiragana, katakana, or alphabetic character, a numeral, or a symbol, character size change information, or change information regarding the addition of the dakuten or the handakuten.

In a still another aspect, the invention provides a system for supporting input confirmation in a mobile terminal device in which information is input using a plurality of keys including a "Power" key, "0" to "9" keys, a "Communication" key, a "#" key, and an "*" key. The system comprises: a character storage unit for storing character input modes assigned to the "Power" key as a representative key, the character input modes including a hiragana input mode, a katakana input mode, an alphabetic input mode, and a numeric input mode, each character input mode being input in association with the press of the "Power" key, the mode being sequentially changed in a cyclic manner every pressing the "Power" key, groups of Japanese hiragana characters and groups of Japanese katakana characters, the groups of each of the hiragana and katakana characters being assigned to the "0" to "9" keys, respectively, each character being input in association with the press of the corresponding key, the character of each group being sequentially changed in a cyclic manner every pressing the corresponding key, the size of the character being changed between full-size and small versions every pressing the "Communication" key as a representative key so long as the size of the character is changeable, the addition of a Japanese diacritic mark (the dakuten or the handakuten) to the character being changed every pressing the "#" key as a representative key so long as the addition of the diacritic mark to the character is permissible, groups of letters of the alphabet, each group consisting of three or four alphabetic characters, the groups being assigned to the "0" to "9" keys, respectively, each character being input in association with the press of the corresponding key, the character of each group being sequentially changed in a cyclic manner every pressing the corresponding key, each character being changed between upper and lower cases every pressing the "Communication" key, numerals "0" to "9" assigned to the "0" to "9" keys, respectively, each numeral being input in association with the press of the corresponding key, and five symbols assigned to the "*" key as a representative key, each symbol being input in association with the press of the "*" key, the symbol being sequentially changed in a cyclic manner every pressing the "*" key. The system further includes: a character input mode position storage unit for storing position values 0 to 3 to identify the hiragana input mode, the katakana input mode, the alphabetic input mode, and the numeric input mode, respectively; a character basic position storage unit for storing position values 0 to 4 to identify the hiragana and katakana characters of each group and the five symbols, position values 0 to 2 or 0 to 3 to identify three or four alphabetic characters of each group, and a position value 0 to identify the numerals, the hiragana, katakana, alphabetic characters, the symbols, and the numerals being stored in the character storage unit; a character size position storage unit for storing position values 0 to 2, the size of each character being identified based on the position value 0 indicating that the hiragana or katakana character is independent of the change between the full-size and small versions, the position value 1 indicating that the character is changeable to the small version (lower case), or the position value 2 indicating that the character is changeable to the full-size version (upper case); and a diacritic mark position storage unit for storing position values 0 to 2, the addition of the dakuten or the handakuten to each hiragana or katakana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible. The system includes: a vibration unit for generating vibration as reaction the number of times corresponding to each of the position values stored in the character input mode position storage unit, the character basic position storage unit, the character size position storage unit, and the diacritic mark position storage unit; and an input confirmation support unit for reading a position value corresponding to input character information from the character input mode position storage unit, the character basic position storage unit, the character size position storage unit, or the diacritic mark position storage unit and allowing the vibration unit to generate vibration as reaction the number of times corresponding to the position value when any one of the "Power" key, the "0" to "9" keys, the "Communication" key, the "#" key, and the "*" key is pressed to enter character input mode change information, input information of a hiragana, katakana, alphabetic character, a numeral, or a symbol, character size change information, or change information regarding the addition of the dakuten or the handakuten.

According to more specific features of the invention, the character storage unit sets whether the character is changeable between the full-size and small versions and whether the addition of the dakuten and/or handakuten is permissible with respect to each of the hiragana characters.

The system comprises: an information position storage unit, wherein the character storage unit stores information groups assigned to a plurality of function keys, respectively, each information group including a plurality of information pieces, each information piece being input in association with the press of the corresponding function key, the information piece of each group being sequentially changed in a cyclic manner every pressing the corresponding function key, the information groups including a group of routine messages, a group of face marks, a group of pictorial symbols, a group of attached pictures, and a group of attached sounds, the information position storage unit stores position values 0 to 4 to identify the information pieces including the routine messages, the face marks, the pictorial symbols, the attached pictures, and the attached sounds, the vibration unit generates vibration in accordance with each of the position values stored in the information position storage unit, and the input confirmation support unit reads a position value from the information position storage unit and allows the vibration unit to generate vibration according to the position value.

The system may comprises a scale storage unit for storing scale notes assigned to the respective keys to input the characters in the character storage unit, wherein the mobile terminal device further includes an audio unit, and each time a key is pressed, the input confirmation support unit reads a note corresponding to the key from the scale storage unit and allows the audio unit to output a sound of the corresponding note. The notes are sequentially assigned to the arranged keys in the row direction or in the column direction in ascending or descending order of the scale.

The vibration unit generates no vibration, one vibration, two vibrations, three vibrations, and four vibrations in accordance with the position values 0, 1, 2, 3, and 4, respectively, or generates one vibration, two vibrations, three vibrations, four vibrations, and five vibrations in accordance with the position values 0, 1, 2, 3, and 4, respectively. An interval between the vibrations is controllable. When an interval between keystrokes on the same key is longer than a predetermined period of time, the vibration unit generates vibration the number of times corresponding to a position value

The mobile terminal device may include an audio unit, in place of the vibration unit. The audio unit generates voice messages "Position value: zero", "Position value: one", "Position value: two", "Position value: three", and "Position value: four" in accordance with the position values 0, 1, 2, 3, and 4, respectively, and the input confirmation support unit allows the audio unit to generate a voice message corresponding to a position value.

In other aspect, the invention provides a method for supporting input confirmation in a mobile terminal device in which information is input using a plurality of keys including "0" to "9" keys, a "Communication" key, a "#" key, and an "*" key.

The method comprises the steps of: storing groups of Japanese hiragana characters, the groups being assigned to the "0" to "9" keys, respectively, the hiragana character of each group being sequentially changed in a cyclic manner every pressing the corresponding key; storing groups of Japanese katakana characters, the groups being assigned to the "0" to "9" keys, respectively, the katakana character of each group being sequentially changed in a cyclic manner every pressing the corresponding key; storing groups of letters of the alphabet, each group consisting of three or four alphabetic characters, the groups being assigned to the "0" to "9" keys, respectively, the character of each group being sequentially changed in a cyclic manner every pressing the corresponding key; storing numerals "0" to "9" assigned to the "0" to "9" keys, respectively; storing five symbols assigned to the "*" key as a representative key, the symbol being sequentially changed in a cyclic manner every pressing the "*" key; storing position values 0 to 4 to identify the hiragana characters of each group; storing position values 0 to 4 to identify the katakana characters of each group; storing position values 0 to 2 or 0 to 3 to identify the alphabetic characters of each group; storing position values 0 to 4 to identify the five symbols; storing a position value 0 to identify the numerals "0" to "9"; and storing position values 0 to 2, the size of each character being identified every pressing the Communication" key as a represent key on the basis of the position value 0 indicating that the hiragana or katakana character is independent of the change between the full-size and small versions, the position value 1 indicating that the character is changeable to the small version (lower case), or the position value 2 indicating that the character is changeable to the full-size version (upper case).

The method further comprises the steps: storing position values 0 to 2, the addition of the dakuten or the handakuten to each hiragana or katakana character being identified every pressing the "#" key as a representative key on the basis of the position value 0 indicating that the character is independent of the addition of the dakuten and the handakuten, the position value 1 indicating that the addition of the dakuten to the character is permissible, or the position value 2 indicating that the addition of the handakuten to the character is permissible; pressing any one of the "0" to "9" keys to input one of the stored hiragana, katakana, and alphabetic characters, and the numerals; pressing the "*" key to enter symbol input information; pressing the "Communication" key to enter character size change information of the hiragana, katakana, or alphabetic character;pressing the "#" key to enter change information regarding the addition of the dakuten or the handakuten to the hiragana or katakana character; and reading a stored position value corresponding to the entered information and generating vibration as reaction the number of times according to the position value.

According to the present invention, even if a user forgets the state of a character entered by the user, the user presses a key and waits for vibration. The user can recognize the current state by vibration without viewing a display (screen).

In other words, information of a character which is being edited is identified on the basis of a unit referred to as a position. Information of the currently edited character can be notified using up to five vibration patterns (reactions) of a vibrator without depending on visual confirmation of an input character such as a hiragana, katakana, or alphabetic character, a numeral, or a symbol. The user can confirm the edited character by the notification without viewing a display (screen).

Consequently, when the user composes an e-mail message or surfs the Web in a cellular telephone simultaneously with another action such as running, the frequency of viewing the display (screen) is reduced. It results in an increase of the efficiencies of character input and the other action and an increase of the safety of the other action.

Further, since the number of times of viewing the display (screen) is decreased, the effect of supporting character input of a visually challenged user is expected.

In addition, the number of vibration patterns (reactions) is small, thus reducing the amount of processes in the cellular telephone, economizing on memory usage, and realizing simple packaging. The small number of vibration patterns (reactions) means that a user-friendly function can be provided.

The invention is further described with reference to the drawings.
Fig. 1 is a schematic view of a cellular telephone serving as a mobile terminal device according to an embodiment of the present invention;
Fig. 2 is a block diagram showing an essential part of the circuitry of a cellular telephone 100 in Fig. 1;
Fig. 3 is a table explaining the relation between respective keys and input characters stored in a character storage unit 112A of a ROM 112 in Fig. 2;
Fig. 4 is a table explaining positions stored in a character input mode position storage unit 112B of the ROM 112 in Fig. 2;
Fig. 5 is a table explaining positions stored in a character basic position storage unit 112C of the ROM 112 in Fig. 2;
Fig. 6 is a table explaining positions stored in a character size position storage unit 112D of the ROM 112 in Fig. 2;
Fig. 7 is a table explaining positions stored in a diacritic mark position storage unit 112E of the ROM 112 in Fig. 2;
Fig. 8 is a diagram explaining vibration types set by a vibration type setting unit 119A of a vibrator control unit 119 in Fig. 2;
Fig. 9 is a diagram explaining an example of vibration timing controlled by the vibration timing unit 119B of the vibrator control unit 119 in Fig. 2 in the case of a vibration type b4;
Figs. 10A to 10C are diagrams explaining the vibration start control operation by a vibration start control unit 119C in Fig. 2;
Fig. 11 is a flowchart of the control operation of an input confirmation support unit 111 A of a control unit 111 in Fig. 2;
Fig. 12 is a flowchart of a position initializing process in step S204 of Fig. 11;
Fig. 13 is a flowchart explaining an example of a first position process in step S206 of Fig. 11;
Fig. 14 is a flowchart explaining another example of the first position process in Fig. 13;
Fig. 15 is a flowchart explaining an example of a second position process in step S208 of Fig. 11;
Fig. 16 is a flowchart explaining an example of a third position process in step S210 of Fig. 11;
Fig. 17 is a flowchart explaining an example of a fourth position process in step S211 of Fig. 11;
Fig. 18 is a flowchart of the control operation of the vibrator control unit 119 in Fig. 2;
Fig. 19 is a flowchart of the control operation of the vibrator control unit 119 according to a first modification of the embodiment;
Fig. 20 is a flowchart of the control operation of the vibrator control unit 119 according to a second modification of the embodiment;
Fig. 21 is a flowchart of the control operation of the vibrator control unit 119 according to a third modification of the embodiment;
Fig. 22 is a block diagram showing an essential part of the circuitry of the cellular telephone 100 according to a fourth modification of the embodiment;
Fig. 23 is a diagram explaining the relation between "Function 1" to "Function 5" keys and input information;
Figs. 24A to 24E show tables explaining positions additionally stored in the character input mode position storage unit 112B of the ROM 112 in Fig. 22;
Fig. 25 is a block diagram showing an essential part of the circuitry of the cellular telephone 100 according to a fifth modification of the embodiment;
Fig. 26 is a diagram explaining voice types set by a voice type setting unit 122A in Fig. 25;
Fig. 27 is a block diagram showing an essential part of the circuitry of the cellular telephone 100 according to a third modification of the embodiment; and
Fig. 28 is a table explaining the relation between respective keys and scale notes stored in a scale storage unit 112K in Fig. 27.

Mobile terminal devices according to the present invention include a cellular telephone, a PHS, and a PDA. A cellular telephone according to an embodiment of the present invention will now be described with reference to the drawings.

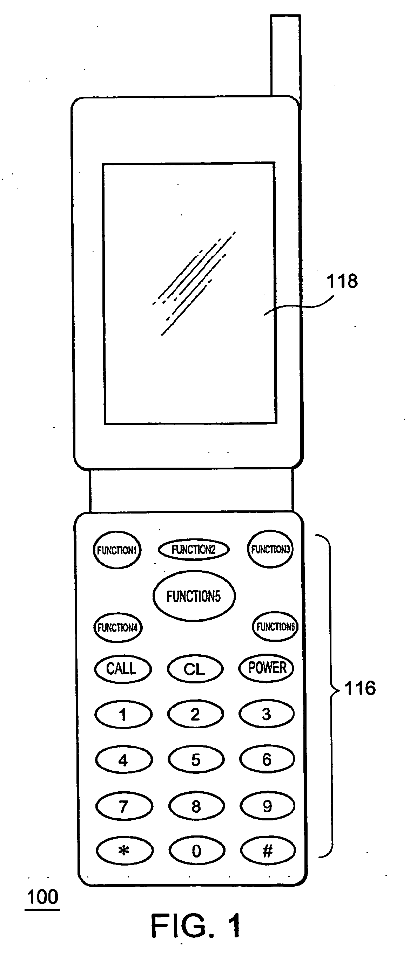

Fig. 1 is a schematic view of a cellular telephone serving as a mobile terminal device according to the present invention. Referring to Fig. 1, a cellular telephone 100 has a function of composing an e-mail message and a function of surfing the Web. The cellular telephone 100 comprises a keypad 116 and a display (screen) 118.

The keypad 116 includes a plurality of keys. Characters which can be input are assigned to most of the keys, respectively.

In other words, a function of switching an input mode between a hiragana input mode, a katakana input mode, an alphabetic input mode, and a numeric input mode is assigned to a "Power" key as a representative key. Hiragana characters and katakana characters of respective groups of Japanese syllabary are assigned to "0" to "9" keys as numeric keys, respectively. Groups each consisting of three or four letters of the alphabet are assigned to the "2" to "9" keys, respectively. Numerals 0 to 9 are assigned to the "0" to "9" keys, respectively. A "Call (Communication)" key is used to change a character between full-size and small versions (upper and lower cases). An "*" key is used to input a symbol. A "#" key is used to add a Japanese diacritic mark, i.e., the dakuten """ or the handakuten "°" to a character.

For example, each time a user presses the "Power" key, the character input mode is changed in a cyclic manner in the following order: the hiragana input mode, the katakana input mode, the alphabetic input mode, the numeric input mode, the hiragana input mode, ...

In the hiragana input mode, each time the user presses the "1" key, a hiragana character to be entered is changed in a cyclic manner in the following order: " 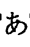 ", " 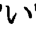 ", " 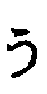 ", " 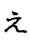 ", " 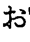 ", " 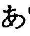 "...

In the katakana input mode, each time the user presses the "1" key, a katakana character to be entered is changed in a cyclic manner in the following order: " 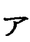 ", " 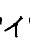 ", " 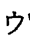 ", " 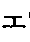 ", " 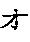 ", " 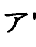 ", ...

In the alphabetic input mode, each time the user presses the "2" key, an alphabetic character to be entered is changed in a cyclic manner in the following order: "A", "B", "C", "A", ...

In the numeric input mode, when the user presses any numeric key, the corresponding numeral is entered.

Further, each time the user presses the "*" key, a symbol to be entered is changed in a cyclic manner in the following order: "?", "!", "-", "/". "&", "?"... Symbols frequently used and user's favorite symbols can be prepared.

A character to be entered is changed every keystroke. In addition, each time a "CL (clear)" key is pressed, a character to be entered can be changed in the inverse order. Even when a character entered is wrongly changed, therefore, the re-entry can be easily performed.

"Function 1" to "Function 6" keys will be described below.

The display 118 has a display function required in the cellular telephone 100 and displays text input by the keypad 116.

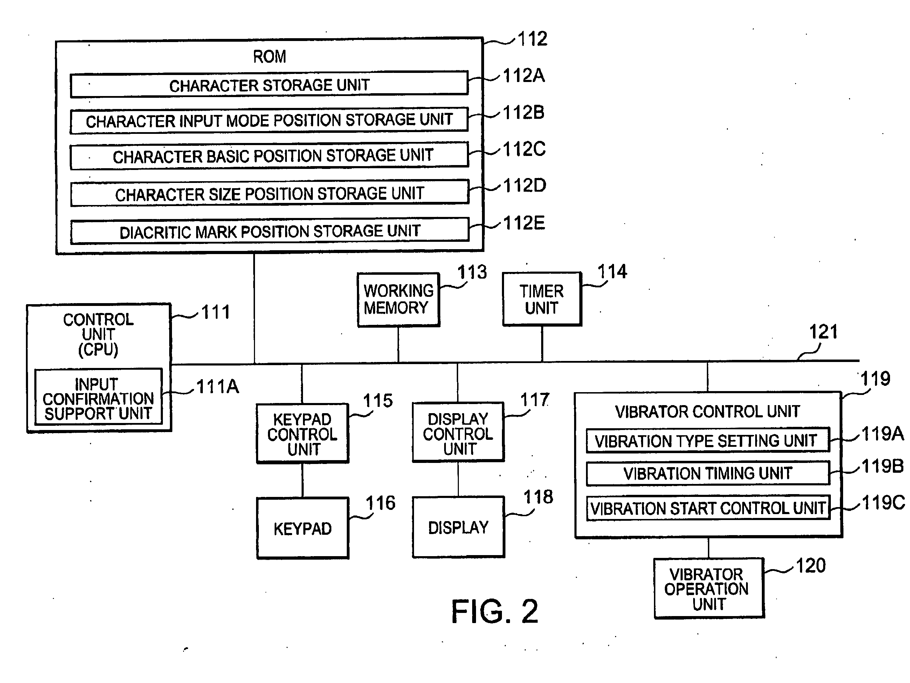

Fig. 2 is a block diagram showing an essential part of the circuitry of the cellular telephone 100 in Fig. 1.

Referring to Fig. 2, the cellular telephone 100 includes a control unit 111. The control unit 111 comprises a central processing unit (CPU) for controlling the whole of the cellular telephone 100. The control unit 111 includes an input confirmation support unit 111A for causing vibration associated with position information used to identify an input character or input information for position information notification. The input confirmation support unit 111A will be described below.

The control unit 111 is connected to a read only memory (ROM) 112 through a bus 121. The ROM 112 stores various control programs and various data. The control unit 111 executes the various control programs. The ROM 112 includes a character storage unit 112A, a character input mode position storage unit 112B, a character basic position storage unit 112C, a character size position storage unit 112D, and a diacritic mark position storage unit 112E.

The control unit 111 is connected to a working memory 113 through the bus 121. The working memory 113 stores data which is temporarily required when the control unit 111 executes a program. The working memory 113 also temporarily stores position information of a character which is being edited, i.e., under which the cursor is currently put.

The control unit 111 is also connected to a timer unit 114 through the bus 121. The timer unit 114 measures an interval after a certain key on the keypad 116 is released until another key is pressed.

The control unit 111 is connected to a keypad control unit 115 through the bus 121. In response to data input by keystrokes on various keys of the keypad 116, the keypad control unit 115 performs processing to realize character input.

The control unit 111 is connected to a display control unit 117 through the bus 121. Based on the control of the input confirmation support unit 111A of the control unit 111, the display control unit 117 allows the display 118 to display an entered character.

The cellular telephone 100 includes a vibrator operation unit 120. The vibrator operation unit 120 notifies the user of position information to identify an edited character. The control unit 111 is connected to a vibrator control unit 119 through the bus 121. The vibrator control unit 119 controls the vibrator operation unit 120. The vibrator control unit 119 includes a vibration type setting unit 119A, a vibration timing unit 119B, and a vibration start control unit 119C. The vibrator control unit 119 is controlled by the input confirmation support unit 111A of the control unit 111 through the timer unit 114.

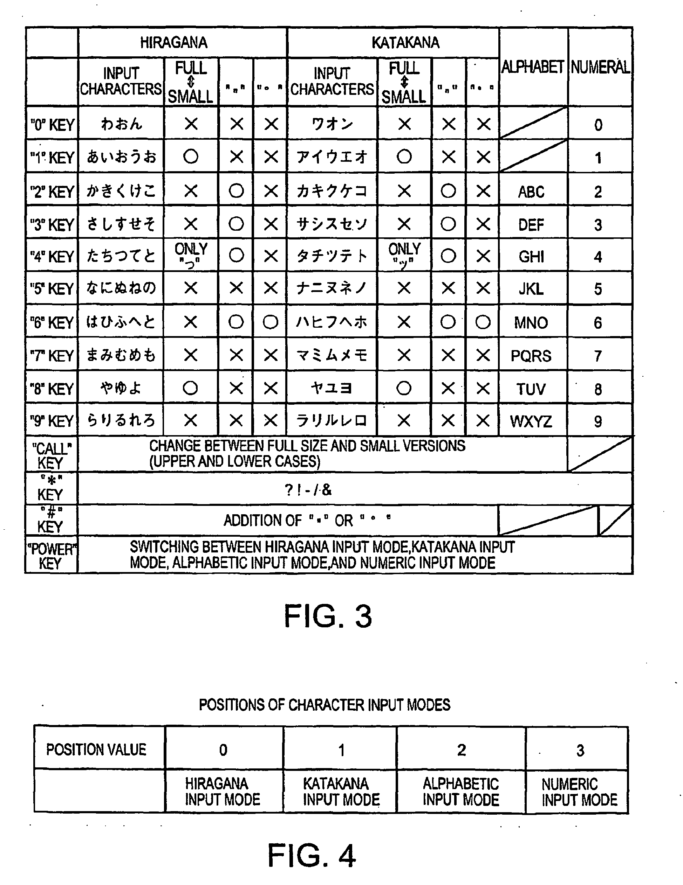

Fig. 3 is a table explaining the relation between the respective keys and input characters stored in the character storage unit 112A of the ROM 112 in Fig. 2.

As shown in Fig. 3, the character storage unit 112A of the ROM 112 stores: the respective groups of the hiragana characters, those of the katakana characters, and the numerals assigned to the "0" to "9" keys; the respective groups each consisting of three or four letters of the alphabet assigned to the "2" to "9" keys; information regarding the change between the full-size and small versions (the upper and lower cases) associated with the "Call" key; the symbols "?", "!", "-", "/", and "&" assigned to the "*" key; information regarding the addition of the dakuten """ or the handakuten "°" assigned to the "#" key; and information regarding the switching between the hiragana input mode, the katakana input mode, the alphabetic input mode, and the numeric input mode assigned to the "Power" key.

Further, whether a character can be switched between the full-size and small versions and whether the dakuten """ and/or the handakuten "°" can be added to the character are set to each of the hiragana and katakana characters of the respective groups assigned to the "0" to "9" keys.

Each time the user presses an arbitrary key of the "0" to "9" keys, a hiragana, katakana, or alphabetic character of the group assigned to the key is sequentially replaced with the next one. After one cycle, the top character returns.

An explanation will now be made with respect to an example of editing a small-version character and adding the diacritic mark to the character. In the hiragana input mode, when the "4" key is pressed three times, a character to be edited is sequentially changed in the following order: " 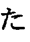 ", " 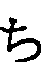 ", and " 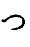 ". In this state, the "Call" key is pressed, so that the character " 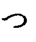 " is changed to the small " 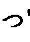 ".

In the case where the character to be edited is the full-sized " 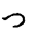 ", when the "#" key is pressed once, the dakuten """ is added to the character, thus producing the character " 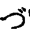 ". However, when the "#" key is pressed while the full-sized " 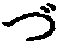 " is displayed, the handakuten "°" is not added to the character. The character " 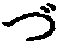 " is not changed.

In the katakana input mode, seven presses of the "6" key change the character to be edited in the following order: " 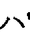 ", " 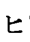 ", " 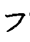 ", " 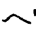 ", " 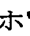 ", "", 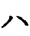 and " 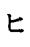 ". While the character " 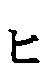 " to be edited is displayed in the screen, four presses of the "#" key change the addition of the dakuten """ or the handakuten "°" to this character in a cyclic manner in the following order: " 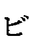 ", " 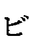 ", " 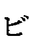 ", and " 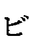 ".

Current general cellular telephones each have 100 or more kinds of available characters, i.e., hiragana characters, katakana characters, small hiragana and katakana characters, full-sized and small hiragana and katakana characters with the diacritic marks, upper and lower cases of letters of the alphabet, numerals, and symbols. It is impractical to assign different reactions to those characters, numerals, and symbols. It is difficult for a user to grasp and identify all of the reactions. Speech means is also available. However, it is difficult to hear the speech in a noisy place. So, it is impractical. It is necessary to realize a character input support to reduce the load of visually confirming input information on the user within a practical range in which the number of kinds of reactions is very small.

For this purpose, note that in the hiragana input mode, repeated presses of the "1" key sequentially replace the character of the group of " 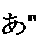 " with another one in a cyclic manner in the following order: " 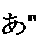 ", " 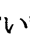 ", " 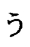 ", " 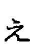 ", " 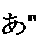 " and 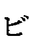 "". Which character is currently to be edited in this cycle is defined as a position and the position is used. Input methods of hiragana characters, katakana characters, letters of the alphabet, and numerals are unified into one method as will be described below.

Fig. 4 is a table explaining positions stored in the character input mode position storage unit 112B of the ROM 112 in Fig. 2.

Referring to Fig. 4, position values 0, 1, 2, and 3 are assigned to the hiragana input mode, the katakana input mode, the alphabetic input mode, and the numeric input mode, respectively. The position values are stored in the character input mode position storage unit 112B.

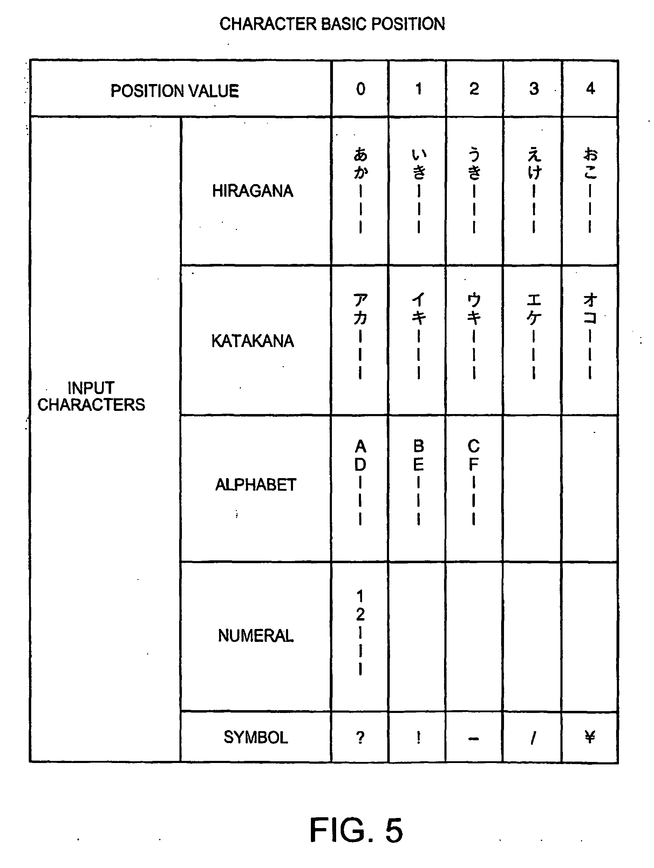

Fig. 5 is a table explaining positions stored in the character basic position storage unit 112C of the ROM 112 in Fig. 2.

As shown in Fig. 5, position values 0, 1, 2, 3, and 4 are assigned to the hiragana and katakana characters of the respective groups and the symbols, respectively. Position values 0, 1, and 2 are assigned to the alphabetic characters, each of which belongs to the 3-letter group. Position values 0, 1, 2, and 3 are assigned to the alphabetic characters belonging to the 4-letter group, respectively. A position value 0 is assigned to each numeral. The positions are stored in the character basic position storage unit 112C.

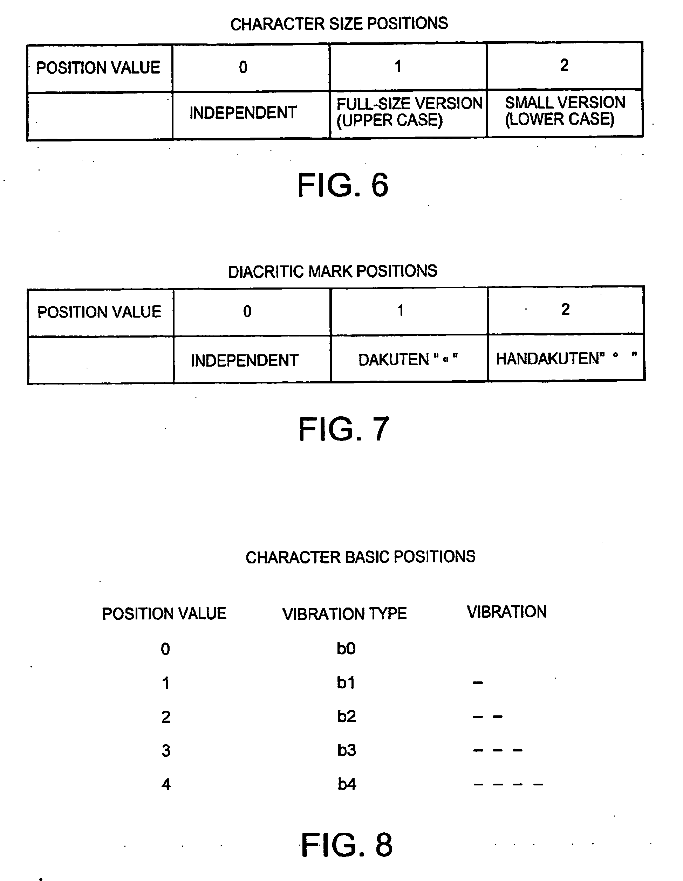

Fig. 6 is a table explaining positions stored in the character size position storage unit 112D of the ROM 112 in Fig. 2.

As shown in Fig. 6, a position value 0 to identify a character which is not changed between the full-size and small versions, namely, which is not independent of the change between the full-size and small versions, a position value 1 to identify a character which is changeable to the full-size version, and a position value 2 to identify a character which is changeable to the small version are stored in the character size position storage unit 112D.

Fig. 7 is a table explaining positions stored in the diacritic mark position storage unit 112E of the ROM 112 in Fig. 2.

As shown in Fig. 7, a position value 0 to identify a character to which the dakuten """ and the handakuten "°" cannot be added, i.e., which is independent of the addition of the dakuten """ and the handakuten, a position value 1 to identify a character to which the dakuten """ can be added, and a position value 2 to identify a character to which the handakuten "°" can be added are stored in the diacritic mark position storage unit 112E.

In the working memory 113 shown in Fig. 2, the relations shown in Figs. 4 to 7 are developed as position information of edited characters to be input.

As mentioned above, reactions to an input character are expressed using minimum five kinds, i.e., position values 0, 1, 2, 3, and 4. When a key is pressed to input a character, a reaction which does not correspond to the pressed key and is associated with the character to be input (edited) can be performed.

Consequently, the state of a character which is currently input can be grasped and the confirming operation while viewing the screen can be lightened.

Fig. 8 is a diagram explaining vibration types set by the vibration type setting unit 119A of the vibrator control unit 119 shown in Fig. 2.

As shown in Fig. 8, the vibration type setting unit 119A sets vibration types b0, b1, b2, b3, and b4 assigned to position values 0, 1, 2, 3, and 4, respectively.

The vibration type setting unit 119A sets the vibration types such that the vibrator operation unit 120 operates a vibrator in the following manner. In the case of the vibration type b0, no vibration occurs. In the case of the type b1, vibration occurs once. In the case of the type b2, vibration occurs twice. In the case of the type b3, vibration occurs three times. In the case of the type b4, vibration occurs four times.

The number of vibrating times of the vibration types b0, b1, b2, b3, and

### b4 can be changed to once, twice, three times, four times, and five times, respectively.

Consequently, an input character can be recognized on the basis of the vibration type, i.e., the number of vibrating times corresponding to a position value.

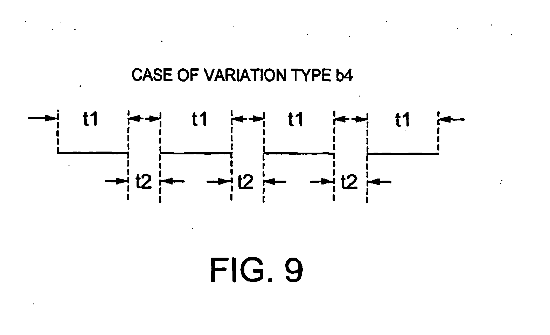

Fig. 9 is a diagram explaining an example of vibration timing controlled by the vibration timing unit 119B of the vibrator control unit 119 shown in Fig. 2 in the case of the vibration type b4.

As shown in Fig. 9, in the case of the vibration type b4, vibration is generated so as to include vibration for time t1, no vibration for time t2, vibration for time t1, no vibration for time t2, vibration for time t1, no vibration for time t2, and vibration for time t1. To suit the preferences of the user, the length of time t1 of vibration and that of time t2 of no vibration are controlled by the vibration timing unit 119B.

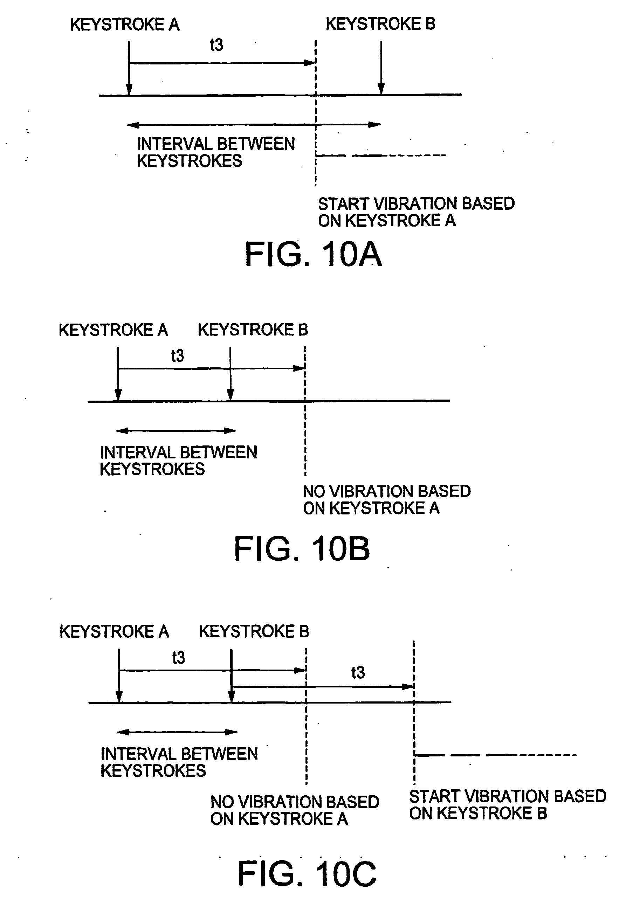

Figs. 10A to 10C are diagrams explaining the vibration start control operation by the vibration start control unit 119C shown in Fig. 2.

As shown in Fig. 10A, the vibration start control unit 119C sets vibration standby time t3. When the interval between a keystroke A and a keystroke B on the same key of the keypad 116 is longer than the vibration standby time t3, a predetermined type of vibration corresponding to the position of the keystroke A starts after a lapse of the vibration standby time t3 from the keystroke A.

Referring to Fig. 10B, when the interval between the keystrokes A and B is shorter than or equal to the vibration standby time t3, the predetermined type of vibration corresponding to the position of the keystroke A is not generated after a lapse of t3 from the keystroke A.

Referring to Fig. 10C, when the interval between the keystrokes A and B is shorter than or equal to the vibration standby time t3 and the same key is not pressed subsequent to the keystroke B, the predetermined type of vibration corresponding to the position of the keystroke A is not generated after a lapse of t3 from the keystroke A and a predetermined type of vibration corresponding to the position of the keystroke B is started after a lapse of t3 from the keystroke B.

In this manner, a predetermined type of vibration is generated after a predetermined period of time from a keystroke, so that the present position can be recognized based on the vibration type.

In the case where the current position is known, when keystrokes are repeated on the same key predetermined number of times, a target character can be input. In this case, therefore, since vibration is not needed every keystroke, vibration is not generated.

In the case where keystrokes are repeated on the same key to input a target character, vibration is generated after a predetermined period of time from the latest keystroke. Thus, the position of the target character can be recognized and the entry of the target character can be confirmed.

The vibration standby time t3 to be set can be adjusted so that vibration start time suits the preferences of the user.

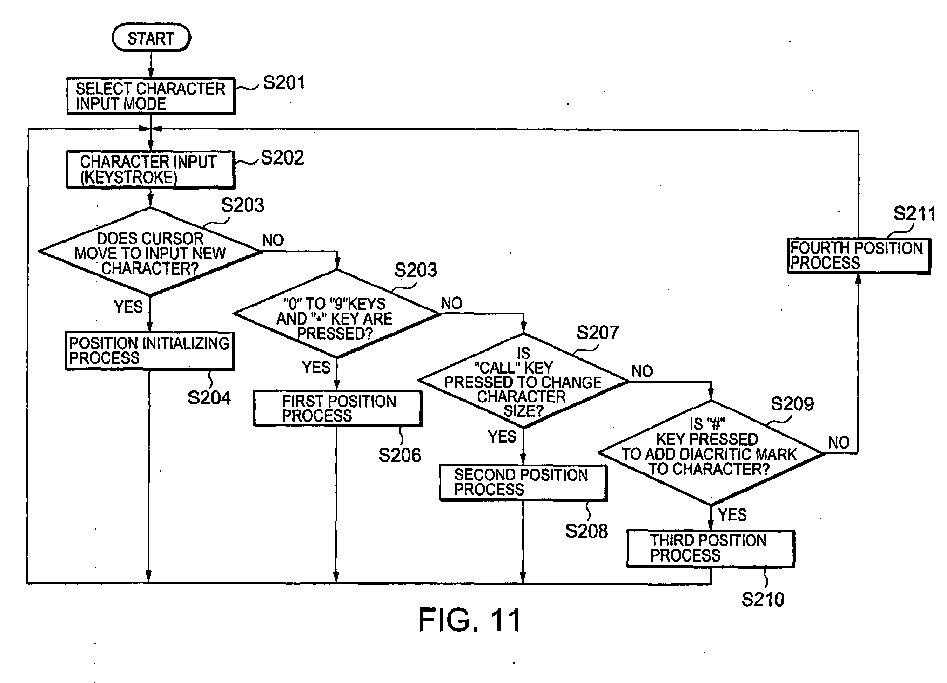

Fig. 11 is a flowchart explaining the control operation related to the input confirmation support unit 111A of the control unit 111 shown in Fig. 2.

In step S201, the user of the cellular telephone 100 presses the "Power" key to select the character input mode.

In step S202, the user presses a key to input a character.

In step S203, whether the cursor moves is determined on the basis of character input. The movement of the cursor means that a character entered by the last keystroke is confirmed and a new character will be subsequently input. For example, assuming that the cursor is put under the last input character " 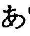 ", when the user presses the "3" key, the cursor moves and the character " 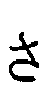 " is newly input, i.e., the cursor is put under the character " 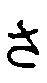 ". The non-moving cursor means that the last input character is being edited. For example, assuming that the cursor is put under the last input character " 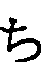 ", when the user presses the "1" key, the cursor under the character " 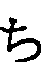 " does not move and the character " 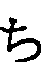 " to be edited is replaced with the character " 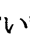 ".

If it is determined in step S203 that the cursor moves, a position initializing process is performed in step S204. The position initializing process will be described below. The routine returns to step S202 and the system waits for the next keystroke.

If it is determined in step S203 that the cursor does not move, in step S205, whether the user presses one of the "0" to "9" keys and the "*" key associated with character basic position information of the hiragana and katakana characters, the alphabetic characters, the numerals, and the symbols is determined.

If the user presses one of the "0" to "9" keys and the "*" key, in step S206, a first position process is performed. The first position process will be described below. The routine returns to step S202 and the system waits for the next keystroke.

If any of the "0" to "9" keys and the "*" key is not pressed, in step S207, whether the user presses the "Call" key to change the character size is determined.

In the user presses the "Call" key, in step S208, a second position process is performed. The second position process will be described below. The routine returns to step S202 and the system waits for the next keystroke.

If the "Call" key is not pressed, in step S209, whether the user presses the "#" key to add the diacritic mark to the character is determined.

If the user presses the "#" key, in step S210, a third position process is performed. The third position process will be described below. The routine returns to step S202 and the system waits for the next keystroke.

If the "#" key is not pressed, in step S211, a fourth position process is performed. The fourth position process will be described below. The routine returns to step S202 and the system waits for the next keystroke.

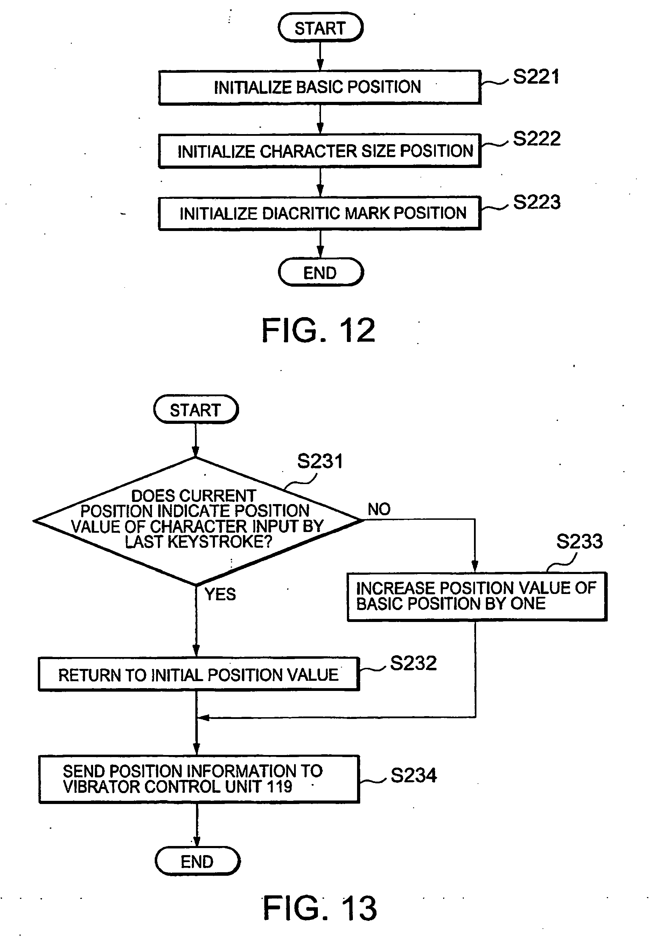

Fig. 12 is a flowchart explaining the position initializing process in step S204 of Fig. 11.

As mentioned above, when the cursor moves and another character is newly input, the position initializing process in step S204 is performed. Referring to Fig. 12, in step S221, character basic position information is initialized. In other words, the position value 0 in Fig. 5 is set.

In step S222, position information indicating the character size of the newly input character is initialized. In other words, the position value 0 of Fig. 6 is set to, e.g., the character " 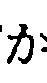 " which is independent of the change between the full-size and small versions. The position value 1 of Fig. 6 is set to, e.g., the upper case "A". The position value 2 of Fig. 6 is set to, e.g., the lower case "a".

In step S223, position information indicating the addition of the diacritic mark, i.e., the dakuten """ or the handakuten "°" is initialized. In other words, irrespective of whether the dakuten """ or the handakuten "°" can be added to the newly input character, the position value 0 of Fig. 7 is set to the newly input character. The process terminates.

Fig. 13 is a flowchart explaining an example of the first position process in step S206 of Fig. 11.

As shown in Fig. 13, the first position process relates to character basic position information. The process varies depending on the character input mode and the keystroke. In step S231, whether the current basic position value is the position value of a character input by the last keystroke is determined.

If the current position value is that by the last keystroke, in step S232, the character basic position value is reset to an initial position value (position value 0).

If the current position value is not that by the last keystroke, in step S233, the position value indicating the character basic position is increased by one.

After the position value indicating the basic position is updated, in step S234, the updated position value is sent from the input confirmation support unit 111A to the vibrator control unit 119.

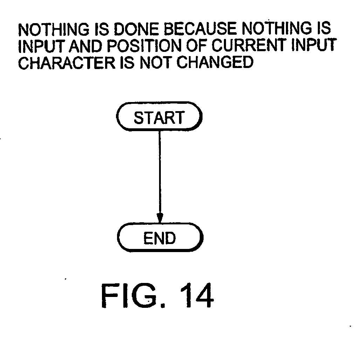

Fig. 14 is a flowchart explaining another example of the first position process in Fig. 13. When the character input mode is the alphabetic input mode and the keystroke is the "0" key or the "1" key, as shown in Fig. 14, the character to be edited is not changed by pressing the key "0". Thus, nothing is done.

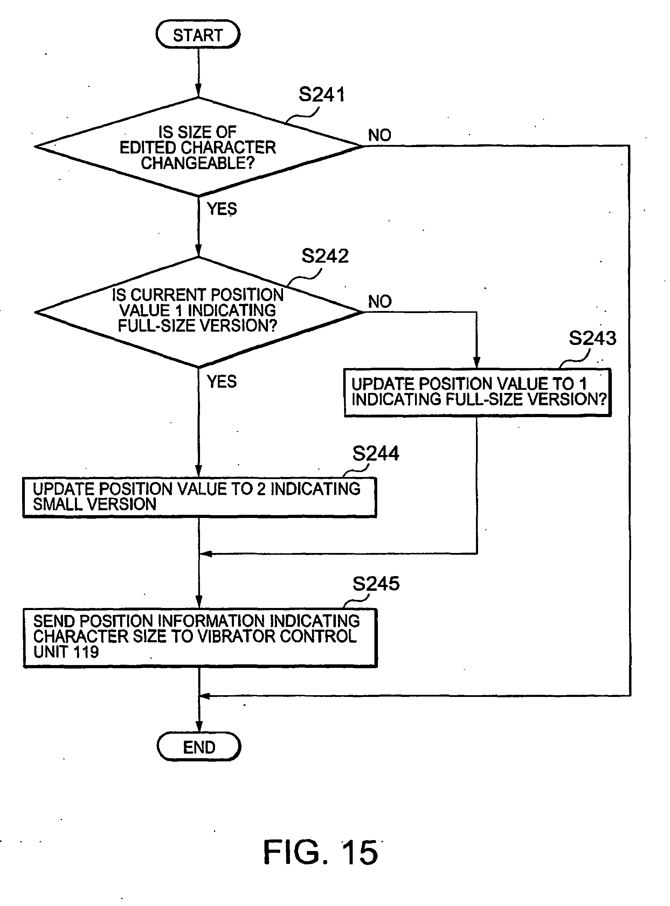

Fig. 15 is a flowchart explaining an example of the second position process in step S208 of Fig. 11.

In the second position process relating to a position value for the character size, in step S241, whether the size of the character to be edited by the keystroke is changeable is determined. If the size is not changeable, the process terminates.

If the size is changeable, in step S242, whether the current position value is 1 indicating the full-size version (upper case) is determined.

If the current position value is 1 indicating the full-size version, in step S243, the position value is updated to 2 indicating the small version (lower case).

On the contrary, if the current position value is 2 indicating the small version, in step S244, the position value is updated to 1 indicating the full-size version.

After the position value is updated, in step S245, the position value indicating the character size is sent from the input confirmation support unit 111A to the vibrator control unit 119. The process terminates.

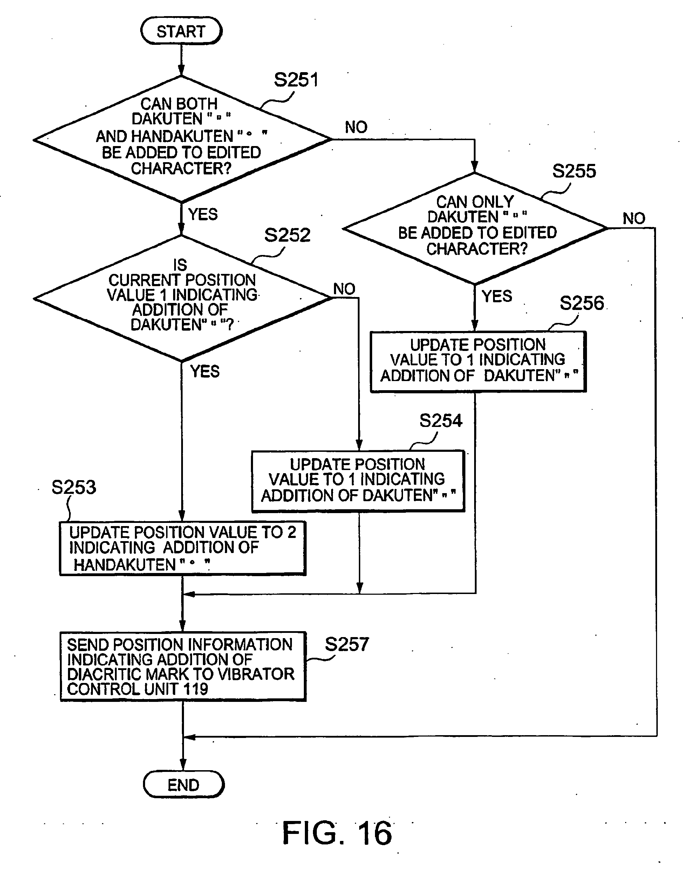

Fig. 16 is a flowchart explaining an example of the third position process in step S210 of Fig. 11.

In the third position process relating to a position value indicating the addition of the dakuten """ or the handakuten "°", in step S251, whether both of the dakuten """ and the handakuten "°" can be added to the character, which is input by the keystroke and is being edited, is determined.

If both the diacritic marks can be added to the edited character, in step S252, whether the current position value is 1 indicating the addition of the dakuten """ is determined.

If the current position value is 1, in step S253, the position value is updated to 2 indicating the addition of the handakuten "°". The process proceeds to step S257.

If it is determined in step S252 that the current position value is 2 indicating the addition of the handakuten "°", in step S254, the position value is updated to 1 indicating the addition of the dakuten """. The process proceeds to step S257.

If it is determined in step S252 that both of the dakuten """ and the handakuten "°" cannot be added to the character, in step S255, whether only the dakuten """ can be added to the edited character is determined. If only the dakuten """ cannot be added to the edited character, the process terminates. In other words, when the dakuten """ cannot be added to the character and the handakuten "°" cannot also be added thereto, the edited character is not changed. Thus, nothing is done.

If only the dakuten """ can be added to the edited character, in step S256, the current position value is updated to 1 indicating the addition of the dakuten """. The process proceeds to step S257. Assuming that the current position value is 1, when a request to add the handakuten "°" is further generated by pressing the key "#", the position value 1 indicating the addition of the dakuten """ is held as it is. For example, assuming that the edited character is the katakana character " 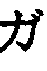 ", when the user presses the "#" key, the katakana character " 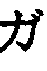 " is not changed.

In step S257, position information indicating the addition of the diacritic mark is sent to the vibrator control unit 119. The process terminates.

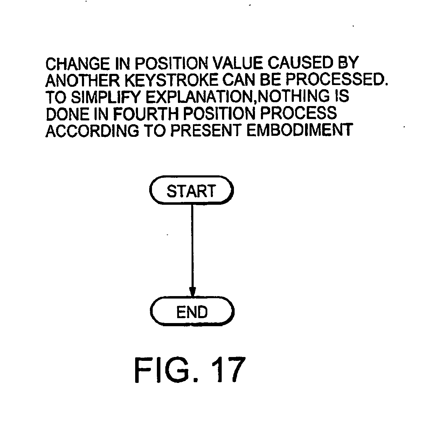

Fig. 17 is a flowchart explaining an example of the fourth position process in step S211 of Fig. 11.

As shown in Fig. 17, a change in position value caused by another keystroke, e.g., any one of "Function 1" to "Function 5" keys can be processed. The "Function 1" to "Function 5" keys will be described below. To simplify the explanation, nothing is done in the fourth position process according to the present embodiment.

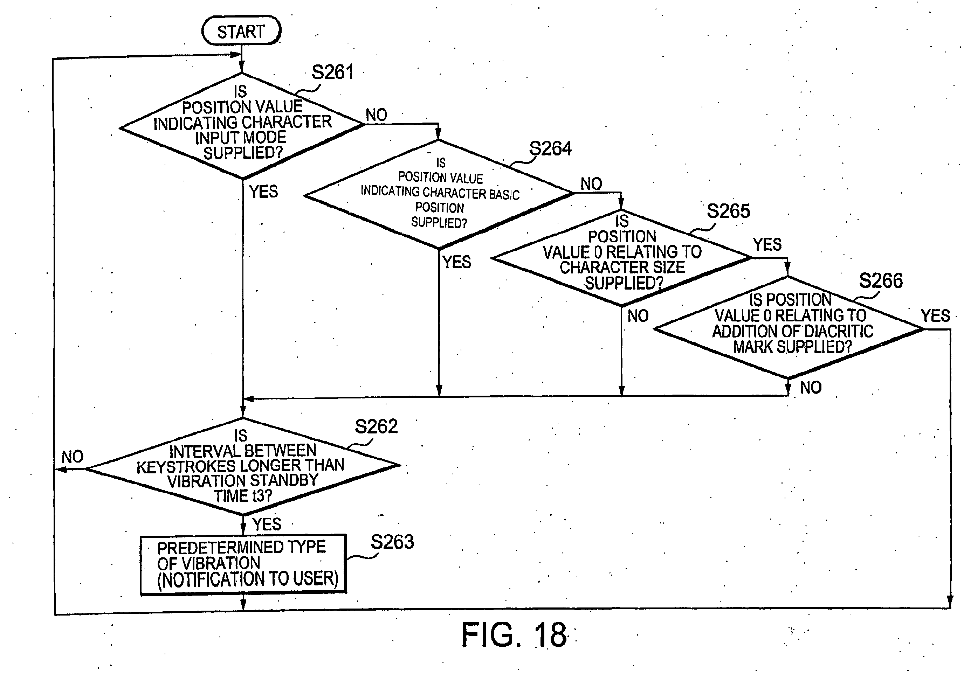

Fig. 18 is a flowchart explaining the control operation of the vibrator control unit 119 in Fig. 2.

Referring to Fig. 18, in step S261, whether a position value indicating the character input mode is supplied to the vibrator control unit 119 from the input confirmation support unit 111A of the control unit 111 is determined. If the position value indicating the character input mode is not supplied, the character input mode has been selected. The operation proceeds to step S264.

If the position value indicating the character input mode is supplied, in step S262, whether the interval between keystrokes on the "Power" key in the keypad 116 is longer than the vibration standby time t3 is determined. If the interval between the keystrokes is shorter than or equal to the vibration standby time t3, the routine returns to step S261. The above-mentioned processing steps are again performed. If the current position value indicating the character input mode has already been recognized, the user presses the "Power" key a predetermined number of times, so that the user can set a target character input mode. In this instance, keystrokes of the predetermined number of times mean successive keystrokes including those on the same key and those on different keys. For example, successive keystrokes include a case where the user presses the "Power" key a predetermined number of times and presses the "1" key a predetermined number of times. The same applies to the following description.

If the interval between the keystrokes is longer than the vibration standby time t3, in step S263, vibration of any one of the vibration types b0 to b3 corresponding to the position value of the entered character input mode is generated, thus notifying the user of the current position value indicating the character input mode. The operation is returned to step S261.

Consequently, when the user forgets which character input mode does the user select in the mode cycle, e.g., the hiragana input mode, the katakana input mode, the alphabetic input mode, or the numeric input mode, the user presses the "Power" key and waits for vibration. When vibration of the type b1 is generated, the user can recognize that the current input mode is the second input mode, i.e., the katakana input mode without viewing the display 118.

In step S264, whether a position value indicating character basic position information is supplied to the vibrator control unit 119 from the input confirmation support unit 111A of the control unit 111 is determined. If any position value indicating character basic position information is not supplied, a target character has been input. The operation proceeds to step S265. If the position value indicating character basic position information is supplied, the operation proceeds to step S262. Whether the interval between keystrokes on any one of the "0" to "9" keys and the "*" key in the keypad 116 is longer than the vibration standby time t3 is determined in step S262. If the interval between the keystrokes is shorter than or equal to the vibration standby time t3 (short interval), the operation is returned to step S261. The above-mentioned processing steps are repeated. If the user knows a position value indicating the current character input mode, the user presses the key a predetermined number of times to input a target character. For example, assuming that the hiragana character " 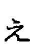 " is a target, the user successively presses the "1" key four times at short intervals, so that the user can enter the character " 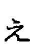 ". If the interval between the keystrokes is longer than the vibration standby time t3 (long interval), the operation proceeds to step S263. Vibration corresponding to any one of the types b0 to b4 is generated on the basis of the position value of the entered character input mode, thus notifying the user of the current position value of the character basic position information. Then, the operation is returned to step S261.

Consequently, when the user forgets which character of the character group in the selected character input mode does the user input, e.g., which of the characters " 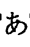 ", " 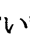 ", " 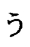 ", " 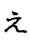 ", and " 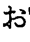 " in the hiragana input mode does the user input, the user presses the corresponding key and waits for vibration. When vibration of the type b3 is generated, the user can recognize that the user enters the fourth character, i.e., the character " 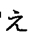 " without viewing the display 118.

In step S265, whether the position value 0 relating to the character size is supplied to the vibrator control unit 119 from the input confirmation support unit 111A of the control unit 111 is determined. If the position value 0 is supplied, the edited character is independent of the change in size. The operation proceeds to step S266. If the position value 0 is not supplied, the operation proceeds to step S262. Whether the interval between keystrokes on the "Call" key in the keypad 116 is longer than the vibration standby time t3 is determined in step S262. If the interval between the keystrokes is shorter than or equal to the vibration standby time t3, the operation is returned to step S261. Because the user already recognizes the position value indicating the character size. If the interval between the keystrokes is longer than the vibration standby time t3, the operation proceeds to step S263. Vibration corresponding to the type b1 or b2 is generated on the basis of the position value indicating the character size, thus notifying the user of the current position value indicating the character size. Then, the operation is returned to step S261.

Consequently, when the user forgets whether the character entered by the user is, e.g., the full-sized hiragana character " 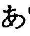 " or the small " 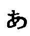 ", the user presses the "Call" key and waits for vibration. When vibration of the type b1 is generated, the user can recognize that the entered character is the full-sized " 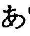 " without viewing the display 118.

In step S266, whether the position value 0 relating to the addition of the diacritic mark is supplied to the vibrator control unit 119 from the input confirmation support unit 111A of the control unit 111 is determined. If the position value 0 is supplied, the edited character is independent of the addition of the dakuten """ and the handakuten "°". The operation is returned to step S261. If the position value 0 is not supplied, the operation proceeds to step S262. Whether the interval between keystrokes on the "#" key in the keypad 116 is longer than the vibration standby time t3 is determined in step S262. If the interval between the keystrokes is shorter than or equal to the vibration standby time t3, the operation is returned to step S261. Because the user already recognizes the position value indicating the addition of the dakuten """ or the handakuten "°". If the interval between the keystrokes is longer than the vibration standby time t3, the operation proceeds to step S263. Vibration corresponding to the type b1 or b2 is generated on the basis of the position value, thus notifying the user of the current position value indicating the addition of the dakuten """ or the handakuten "°". Then, the operation is returned to step S261.

Consequently, when the user forgets whether the character entered by the user is accompanied with the dakuten """ or the handakuten "°", the user presses the "#" key and waits for vibration. When vibration of the type b1 is generated, the user can recognize the entry of the character with the dakuten """ without viewing the display 118.

As mentioned above, information of a character to be edited currently is identified based on a position value. The information of the currently edited character can be notified using up to five vibration patterns (reactions) irrespective of a character such as a hiragana, katakana, or alphabetic character, a numeral, or a symbol. Due to the notification, therefore, the user can confirm the currently edited character without viewing the display 118.

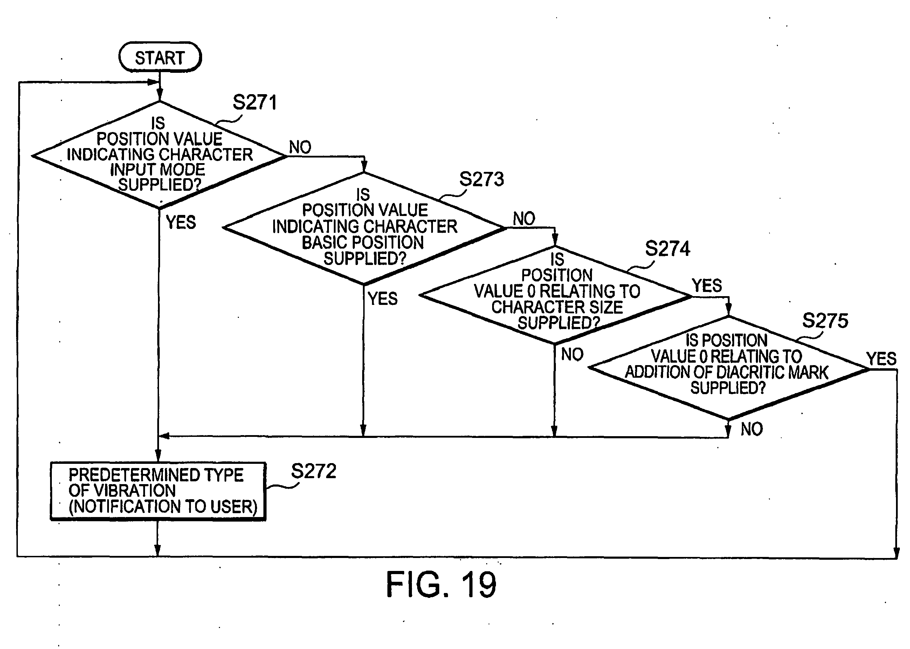

Fig. 19 is a flowchart explaining the control operation of the vibrator control unit 119 according to a first modification of the first embodiment.

In Fig. 19, if a position value indicating the character input mode is supplied in step S271, if a position value indicating the character basic position is supplied in step S273, if the position value 1 or 2 indicating the character size is supplied in step S274, or if the position value 1 or 2 indicating the addition of the dakuten """ or the handakuten "°" is supplied in step S275, a predetermined type of vibration is generated in step S272, thus notifying the user of the present state.

As mentioned above, in Fig. 19, step S262 of Fig. 18 is omitted. The reason is that the user confirms the position by vibration every keystroke irrespective of the interval between keystrokes to enter a target character with reliability.

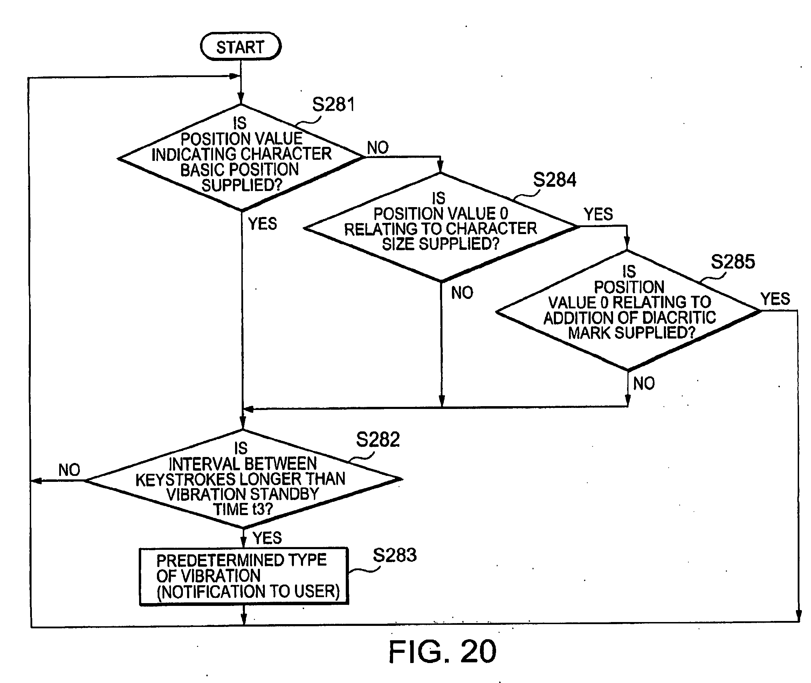

Fig. 20 is a flowchart of the control operation of the vibrator control unit 119 according to a second modification of the first embodiment.

In Fig. 20, step S261 of Fig. 18 is omitted. Since step S261 is eliminated, the user first selects a character input mode by visual observation. If the character input mode is not often changed, visually selecting the input mode is easier.

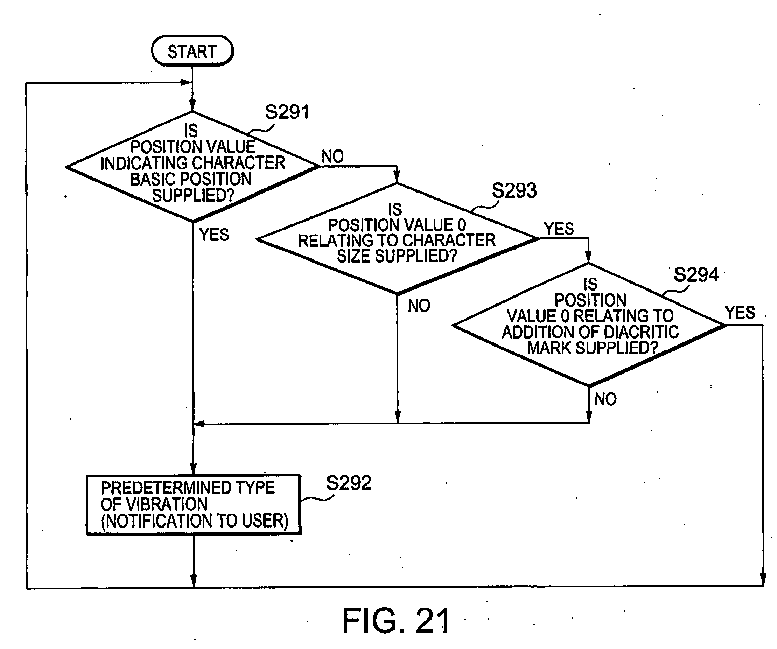

Fig. 21 is a flowchart of the control operation of the vibrator control unit 119 according to a third modification of the first embodiment.

In Fig. 21, steps S261 and S262 of Fig. 18 are omitted. Since step S261 is omitted, the user first selects a character input mode by visual observation. If the character input mode is not often changed, visually selecting the input mode is easier. In addition, the reason why step S262 is omitted is that the user confirms the position by vibration every keystroke irrespective of the interval between keystrokes to enter a target character with reliability.

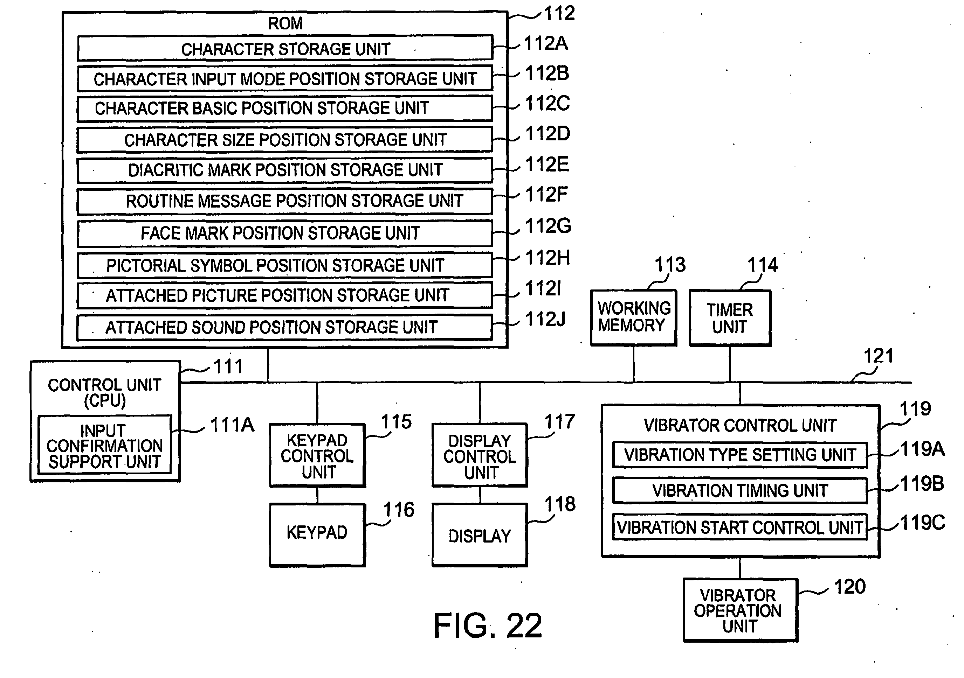

Fig. 22 is a block diagram of an essential part of the cellular telephone 100 according to a fourth modification of the first embodiment.

Routine message information is assigned to the "Function 1" key shown in Fig. 1, face mark information is assigned to the "Function 2" key, pictorial symbol information is assigned to the "Function 3" key, attached picture information is assigned to the "Function 4" key, and attached sound information is assigned to the "Function 5" key. The character storage unit 112A of the ROM 112 further stores the above-mentioned information. The "Function 6" is a spare.

As shown in Fig. 22, the ROM 112 includes the character storage unit 112A, the character input mode position storage unit 112B, the character basic position storage unit 112C, the character size position storage unit 112D, and the diacritic mark position storage unit 112E, which are the same as those in Fig. 2 according to the first embodiment. According to the fourth modification, the ROM 112 further includes a routine message position storage unit 112F, a face mark position storage unit 112G, a pictorial symbol position storage unit 112H, an attached picture position storage unit 112I, and an attached sound position storage unit 112J.

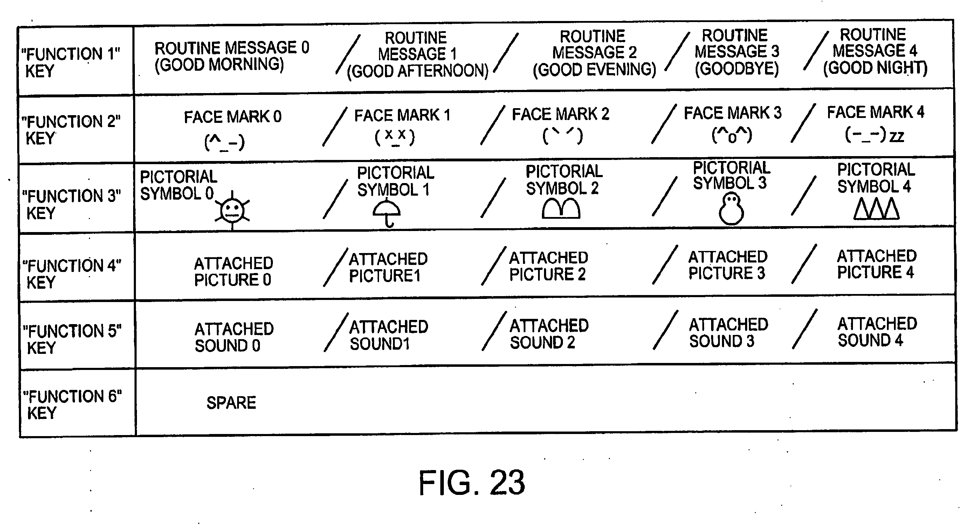

Fig. 23 is a table explaining the relations between input information and the "Function 1" to "Function 5" keys.

As shown in Fig. 23, various input information groups are related with the "Function 1" to "Function 5" keys, respectively. An input information piece belonging to each group is replaced with the next one in a cyclic manner each time the user presses the corresponding key.

In other words, each time the user presses the "Function 1" key, routine message input information is changed in a cyclic manner in the following order: a routine message 0 "Good morning", a routine message 1 "Good afternoon", a routine message 2 "Good evening", a routine message 3 "Goodbye", a routine message 4 "Good night", the routine message 0 "Good morning", ...

In addition, each time the user presses the "Function 2" key, face mark input information is changed in a cyclic manner in the following order: a face mark 0 "(^_-)", a face mark 1 "(*_*)", a face mark 2 "('_')", a face mark 3 "(^0^)", a face mark 4 "(-_-)zz", the face mark 0 "(^_- )", ...

Further, each time the user presses the "Function 3" key, pictorial symbol input information is changed in a cyclic manner in the following order: a pictorial symbol 0, a pictorial symbol 1, a pictorial symbol 2, a pictorial symbol 3, a pictorial symbol 4, the pictorial symbol 0, ...

In addition, each time the user presses the "Function 4" key, attached picture input information is changed in a cyclic manner in the following order: an attached picture 0, an attached picture 1, an attached picture 2, an attached picture 3, an attached picture 4, the attached picture 0, ...

Further, each time the user presses the "Function 5" key, attached sound input information is changed in a cyclic manner in the following order: an attached sound 0, an attached sound 1, an attached sound 2, an attached sound 3, an attached sound 4, the attached sound 0, ...

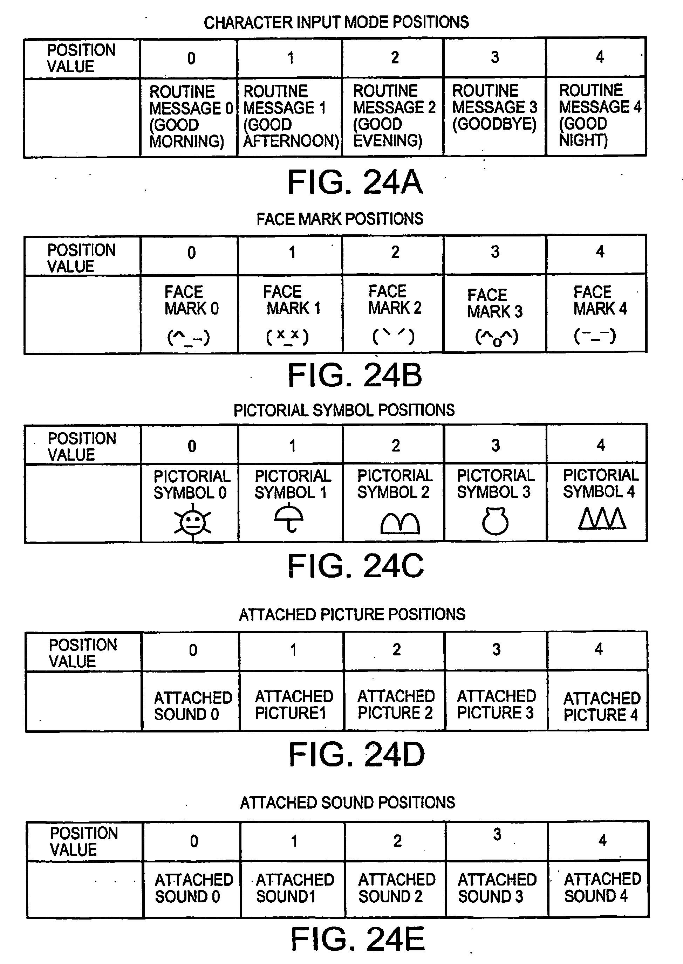

Figs. 24A to 24E show tables explaining positions additionally stored in the character input mode position storage unit 112B of the ROM 112 in Fig. 22.

Referring to Fig. 24A, position values 0 to 4 are assigned to the routine messages 0 to 4, respectively. The relation therebetween is stored in the routine message position storage unit 112F.

Referring to Fig. 24B, position values 0 to 4 are assigned to the face marks 0 to 4, respectively. The relation therebetween is stored in the face mark position storage unit 112G.

Referring to Fig. 24C, position values 0 to 4 are assigned to the pictorial symbols 0 to 4, respectively. The relation therebetween is stored in the pictorial symbol position storage unit 112H.

Referring to Fig. 24D, position values 0 to 4 are assigned to the attached pictures 0 to 4, respectively. The relation therebetween is stored in the attached picture position storage unit 112I.

Referring to Fig. 24E, position values 0 to 4 are assigned to the attached sounds 0 to 4, respectively. The relation therebetween is stored in the attached sound position storage unit 112J.

As mentioned above, position information can be defined in accordance with the features of the cellular telephone 100.

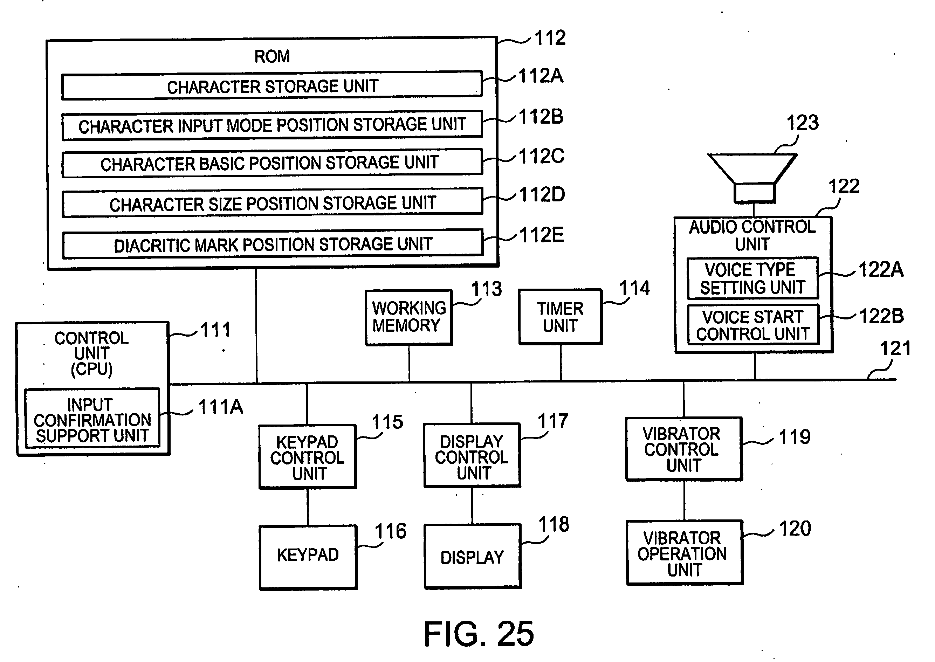

Fig. 25 is a block diagram of an essential part of the cellular telephone 100 according to a fifth modification of the first embodiment.

As shown in Fig. 25, the cellular telephone 100 further includes a speaker 123. The speaker 123 notifies the user of position information of an edited character. The control unit 111 is connected to an audio control unit 122 through the bus 121. The audio control unit 122 for controlling the speaker 123 includes a voice setting unit 122A and a voice start control unit 122B. The input confirmation support unit 111 A of the control unit 111 controls the audio control unit 122.

When the term "vibration" is replaced with a term "voice output" in Fig. 10, the voice start control unit 122B can be understood. Therefore, the description of the voice start control unit 122B using another drawing is not omitted.

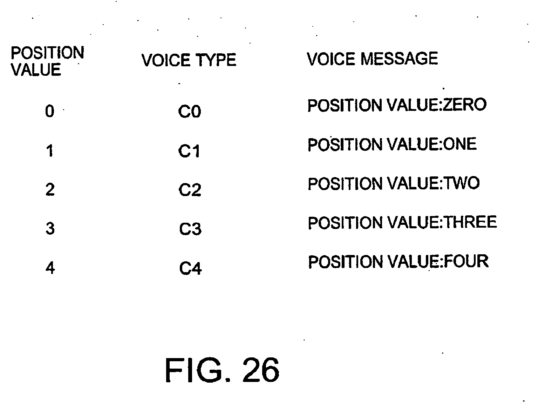

Fig. 26 is a diagram explaining voice types set by the voice type setting unit 122A in Fig. 25.

As shown in Fig. 26, in the voice type setting unit 122A, voice types c0 to c4 are assigned to position values 0 to 4, respectively.

The voice type setting unit 122A sets the voice types to the speaker 123 such that a voice message "Position value: zero" is generated in the case of the voice type c0, a voice message "Position value: one" is generated in the case of the voice type c1, a voice message "Position value: two" is generated in the case of the voice type c2, a voice message "Position value: three" is generated in the case of the voice type c3, and a voice message "Position value: four" is generated in the case of the voice type c4.

As mentioned above, a voice output is used in place of vibration, so that an input character can be confirmed based on the voice type corresponding to the position value of the character.

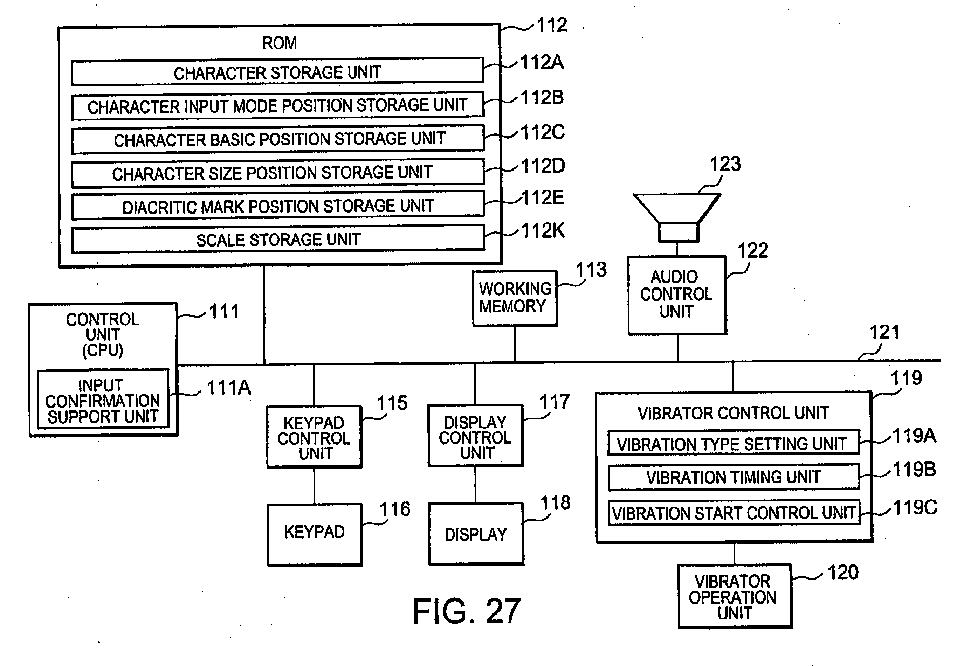

Fig. 27 is a block diagram of an essential part of the circuitry of the cellular telephone 100 according to a sixth modification of the first embodiment.

Referring to Fig. 27, in the cellular telephone 100, the ROM 112 includes the character storage unit 112A, the character input mode position storage unit 112B, the character basic position storage unit 112C, the character size position storage unit 112D, and the diacritic mark position storage unit 112E in the same way as that of the first embodiment shown in Fig. 2. According to the sixth modification, the ROM 112 further includes a scale storage unit 112K, which will be described below.

In addition, the cellular telephone 100 includes the speaker 123. The speaker 123 generates a musical note of the "do-re-mi" scale in accordance with a keystroke to notify the user of the position of an edited character. The control unit 111 is connected to the audio control unit 122 through the bus 121. The audio control unit 122 controls the speaker 123.

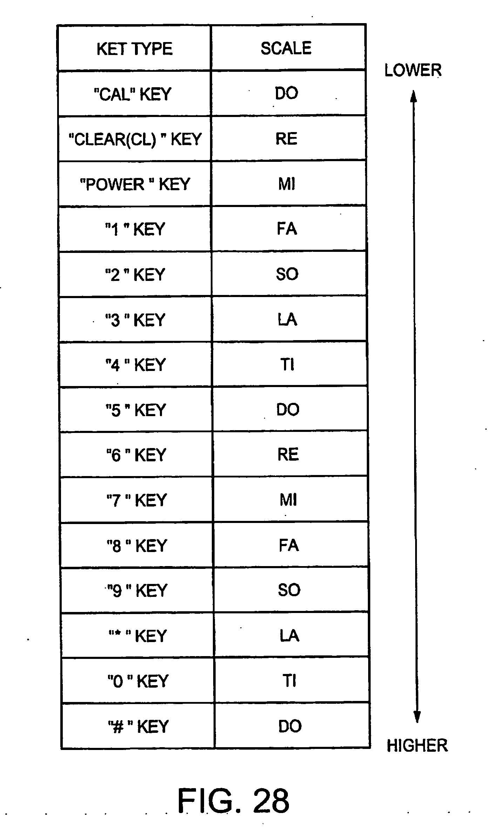

Fig. 28 is a table explaining the relation between the respective keys and notes stored in the scale storage unit 112K in Fig. 27.

As shown in Fig. 28, "Do" is assigned to the "Call" key, "Re" is assigned to the "Clear (CL)" key, "Mi" is assigned to the "Power" key, "Fa" is assigned to the "1" key, "So" is assigned to the "2" key, "La" is assigned to the "3" key, "Ti" is assigned to the "4" key, "Do (octave higher)" is assigned to the "5" key, "Re (octave higher)" is assigned to the "6" key, "Mi (octave higher)" is assigned to the "7" key, "Fa (octave higher)" is assigned to the "8" key, "So (octave higher)" is assigned to the "9" key, "La (octave higher)" is assigned to the "*" key, "Ti (octave higher)" is assigned to the "0" key, and "Do (two octaves higher)" is assigned to the "#" key. The relation therebetween is stored in the scale storage unit 112K.

According to the sixth modification, the notes are sequentially assigned to the arranged keys in the row direction from top to bottom in ascending order of the scale. The notes can be assigned to the respective keys in the column direction from top to bottom. Alternatively, the notes can be assigned to the respective keys in the column direction from bottom to top.

As mentioned above, a note of the scale is generated every keystroke to notify the user of the position of the corresponding key. The user can detect the position of a key the user presses without depending on the sensation in their finger. Even if the user presses a wrong key, the user can detect the wrong keystroke. Thus, erroneous input can be prevented.

Character input on the cellular telephone has been described. The present invention can similarly support character input on other mobile terminal devices such as a PHS and a PDA.

## Claims

1. A system for supporting input confirmation in a mobile terminal device in which information is input using a plurality of keys, the system comprising:
an information storage unit (112A- 112E) for storing various groups of information pieces, the groups being assigned to the plurality of keys, respectively,
the information pieces of each group being sequentially changed within said group in a cyclic manner every pressing the corresponding key of said plurality of keys and thereby changing a basic position value in a cyclic manner every pressing the corresponding key;
an information basic position storage unit (112B -112E) for storing the basic positions value to identify the information pieces of the respective groups stored in the information storage unit (112A - 112E); and
an input confirmation support unit (111A) for reading said position value corresponding to an input information piece and allowing a reaction unit (119, 120, 122, 123) to perform reactions corresponding to the read position value,
**characterized in that**
the reaction unit is adapted to perform different predetermined types of vibrations or sounds, after a predetermined period of time from a keystroke, which correspond to the respective position value, so that the present position of the information pieces of the group is recognized based on the vibration or sound type.

2. A system according to Claim 1 being **characterized in that**:
the information storage unit includes a character storage unit (112A) for storing groups of Japanese hiragana characters, the groups being assigned to "0" to "9" keys, respectively, each character being input in association with the press of the corresponding key, the character of each group being sequentially changed in a cyclic manner every pressing the corresponding key, the size of the character being changed between full-size and small versions every pressing a first representative key ("Call" key) so long as the size of the character is changeable, the addition of a Japanese diacritic mark (the dakuten or the handakuten) to the character being changed every pressing a second representative key ("#" key) so long as the addition of the diacritic mark to the character is permissible;
the information basic position storage unit (112B-112E) includes
a character basic position storage unit (112C) for storing position values 0 to 4 to identify the hiragana characters of each group stored in the character storage unit,
a character size position storage unit (112D) for storing position values 0 to 2, the size of each hiragana character being identified based on the position value 0 indicating that the character is independent of the change between the full-size and small versions, the position value 1 indicating that the character is changeable to the small version, or the position value 2 indicating that the character is changeable to the full-size version, and
a diacritic mark position storage unit (112E) for storing position values 0 to 2, the addition of the dakuten or the handakuten to each hiragana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible; and
the input confirmation support means (111A, 119, 120) reads a position value corresponding to input character information from the character basic position storage unit (112C), the character size position storage unit (112D), or the diacritic mark position storage unit (112E) and allows a vibration unit (120) to generate vibration as reaction the number of times corresponding to the position value when any one of the "0" to "9" keys, the first representative key, and the second representative key is pressed to enter hiragana character input information, character size change information, or change information regarding the addition of the dakuten or the handakuten.

3. A system according to Claim 1 being **characterized in that:**
the information storage unit includes a character storage unit (112A) for storing groups of Japanese katakana characters, the groups being assigned to "0" to "9" keys, respectively, each character being input in association with the press of the corresponding key, the character of each group being sequentially changed in a cyclic manner every pressing the corresponding key, the size of the character being changed between full-size and small versions every pressing a first representative key ("Calls key) so long as the size of the character is changeable, the addition of a Japanese diacritic mark (the dakuten or the handakuten) to the character being changed every pressing a second representative key ("#" key) so long as the addition of the diacritic mark to the character is permissible;
the information basic position storage unit (112B-112E) include
a character basic position storage unit (112C) for storing position values 0 to 4 to identify the katakana characters of each group stored in the character storage unit;
a character size position storage unit (112D) for storing position values 0 to 2, the size of each katakana character being identified based on the position value 0 indicating that the character is independent of the change between the full-size and small versions, the position value 1 indicating that the character is changeable to the small version, or the position value 2 indicating that the character is changeable to the full-size version, and
a diacritic mark position storage unit (112E) for storing position values 0 to 2, the addition of the dakuten or the handakuten to each katakana character being identified based on the position value 0 vindicating that the character is independent of the addition of the dakuten and the handakuten, the position value 1 indicating that the addition of the dakuten to the character is permissible, or the position value 2 indicating that the addition of the handakuten to the character is permissible; and
the input confirmation support means (111A, 119,120) reads a position value corresponding to input character information from the character basic position storage unit (112C), the character size position storage unit (112D), or the diacritic mark position storage unit (112E) and allows a vibration unit (120) to generate vibration as reaction the number of times corresponding to the position value when any one of the "0" to "9" keys, the first representative key, and the second representative key is pressed to enter katakana character input information, character size change information, or change information regarding the addition of the dakuten or the handakuten.

4. A system according to Claim 1 being **characterized in that:**
the Information storage unit includes a character storage unit (112A) for storing groups of letters of the alphabet, each group consisting of three or four alphabetic characters, the groups being assigned to "0" to "9" keys, respectively, each character being input in association with the press of the corresponding key, the character of each group being sequentially changed in a cyclic manner every pressing the corresponding key, the size of the character being changed between upper and lower cases every pressing a first representative key ("Call" key);
the information basic position storage unit (112B-112E) includes
a character basic position storage unit for storing position values 0 to 2 or 0 to 3 to identify three or four characters of each group stored in the character storage unit,
a character size position storage unit(112D) for storing position values 1 and 2, the size of each character being identified based on the position value 1 indicating that the character is changeable to the lower case or the position value 2 indicating that the character is changeable to the upper case; and the input confirmation support means (111A, 119,120) reads a position value corresponding to input character information from the character basic position storage unit (112C) or the character size position storage unit (112D) and allows a vibration unit (120) to generate vibration as reaction the number of times corresponding to the position value when any one of the "0" to "9" keys and the first representative key is pressed to enter alphabetic character input information or character size change information.

5. The system according to any one of Claims 2 to 4, wherein:
the memory (112) includes a scale storage unit (112K) for storing scale notes assigned to the respective keys related with the characters in the character storage unit (112A), and
the input confirmation support means (111A,122,123) reads a note corresponding to the key from the scale storage unit (112K) and allows an audio unit (122,123) to output a sound of the corresponding note.

6. The system according to Claim 5, wherein the notes are sequentially assigned to the arranged keys in the row direction or in the column direction in ascending or descending order of the scale.

7. The system according to any one of Claims 2 to 4, wherein the vibration unit (119,120) generates no vibration, one vibration, two vibrations, three vibrations, and four vibrations in accordance with the position values 0, 1, 2, 3, and 4, respectively, or generates one vibration, two vibrations, three vibrations, four vibrations, and five vibrations in accordance with the position values 0,1,2,3, or 4, respectively.

8. The system according to Claim 7, wherein an interval between the vibrations is controllable.

9. The system according to any one of Claims 2 to 8, wherein when an interval between keystrokes on the same key is longer than a predetermined period of time, the vibration unit generates vibration the number of times corresponding to a position value.

10. The system according to any one of Claims 2 to 4, wherein
the mobile terminal device includes an audio unit,
in place of the vibration unit, the audio unit generates voice messages "Position value zero", "Position value one", "Position value two", "Position value three", and "Position value four" in accordance with the position values 0,1,2,3, and 4, respectively, and
the input confirmation support means allows the audio unit to generate a voice message corresponding to a position value.

11. A system according to Claim 1 wherein:
the information storage unit includes a character storage unit (112A) for storing
groups of Japanese hiragana characters and groups of Japanese katakana characters, the groups of each of the hiragana and katakana characters being assigned to "0" to "9" keys, respectively, each character being input in association with the press of the corresponding key, the character of each group being sequentially changed in a cyclic manner every pressing the corresponding key, the size of the character being changed between full-size and small versions every pressing a first representative key ("Call" key) so long as the size of the character is changeable, the addition of a Japanese diacritic mark (the dakuten or the handakuten) to the character being changed every pressing a second representative key ("#" key) so long as the addition of the diacritic mark to the character is permissible,
groups of letters of the alphabet, each group consisting of three or four alphabetic characters, the groups being assigned to the "0" to "9" keys, respectively, each character being input in association with the press of the corresponding key, the character of each group being sequentially changed in a cyclic manner every pressing the corresponding key, each character being changed between upper and lower cases every pressing the first representative key,
numerals "0" to "9" assigned to the "0" to "9" keys, respectively each numeral being input in association with the press of the corresponding key, and
five symbols assigned to the third representative key, each symbol being input in association with the press of a third representative key ("*" key), the symbol being sequentially changed in a cyclic manner every pressing the third representative key;
the information basic position storage unit (112B-112E) includes a character basic position storage unit for storing position values 0 to 4 to identify the hiragana and katakana characters of each group and the five symbols, position values 0 to 2 or 0 to 3 to identify three or four alphabetic characters of each group, and a position value 0 to identify the numerals, the hiragana, katakana, alphabetic characters, the symbols, and the numerals being stored in the character storage unit,
a character size position storage unit (112D) for storing position values 0 to 2, the size of each character being identified based on the position value 0 indicating that the hiragana or katakana character is independent of the change between the full-size and small versions, the position value 1 indicating that the character is changeable to the small version (lower case), or the position value 2 indicating that the character is changeable to the full-size version (upper case), and
a diacritic mark position storage unit (112E) for storing position values 0 to 2, the addition of the dakuten or the handakuten to each hiragana or katakana character being identified based on the position value 0 indicating that the character is independent of the addition of the dakuten and the handakuten, the position value 1 indicating that the addition of the dakuten to the character is permissible, or the position value 2 indicating that the addition of the handakuten to the character is permissible; and
the input confirmation support means (111A) reads a position value corresponding to input character information from the character basic position storage unit (112C), the character size position storage unit (112D), or the diacritic mark position storage unit (112E) and allows a vibration unit to generate vibration as reaction the number of times corresponding to the position value when any one of the "0" to "9" keys, the first representative key, the second representative key, and the third representative key is pressed to enter input information of a hiragana, katakana, or alphabetic character, a numeral, or a symbol, character size change information, or change information regarding the addition of the dakuten or the handakuten.

12. The system according to Claim 11, wherein:
the character storage unit (112A) stores information groups assigned to a plurality of function keys ("FUNCTION1-6" key), respectively, each information group including a plurality of information pieces, each information piece being input in association with the press of the corresponding fu nction key, - the information piece of each group being sequentially changed in a cyclic manner every pressing the corresponding function key, the information groups including a group of routine messages, a group efface marks, a group of pictorial symbols, a group of attached pictures, and a group of attached sounds,
the memory includes an information position storage unit (1112F-112J) which stores position values 0 to 4 to identify the information pieces including the routine messages, the face marks, the pictorial symbols, the attached pictures, and the attached sounds, and
the input confirmation support means (111A) reads a position value from the information position storage unit and allows the vibration unit to generate vibration according to the position value.

13. A system according to any one of Claims 11, wherein:
the information storage unit stores character input modes assigned to a fourth representative key ("Power" key), the character input modes including a hiragana input mode, a katakana input mode, an alphabetic input mode, and a numeric input mode, each character input mode being input in association with the press of the fourth representative key, the mode being sequentially changed in a cyclic manner every pressing the fourth representative key,
the information basic position unit (112B-112E) includes a character input mode position storage unit (112B) for storing position values 0 to 3 to identify the hiragana input mode, the katakana input mode, the alphabetic input mode, and the numeric input mode, respectively, and
the input confirmation support means (111A) reads a position value corresponding to input character information from the character input mode position storage unit, and allows the vibration unit((119, 120) to generate vibration as reaction the number of times corresponding to the position value when the fourth representative key is pressed to enter character input mode change information,

14. A method for supporting input confirmation in a mobile terminal device (100) in which information is input using a plurality of keys (116), the mobile terminal device comprising:
an information storage unit (112A- 112E) for storing various groups of information pieces, the groups being assigned to the plurality of keys, respectively,
the method including the steps:
changing the information pieces of each group within said group in a cyclic manner every pressing the corresponding key of said plurality of keys and thereby changing a basic position value in a cyclic manner every pressing the corresponding key;
storing the basic position value to identify the information piece of the respective group stored in the information storage unit (112A - 112E) in an information basic position storage unit (112B -112E); and
reading said position value corresponding to an input information piece by an input confirmation support unit (111A) and allowing a reaction unit (119, 120, 122, 123) to perform reactions corresponding to the read position value,
**characterized by**
performing different predetermined types of vibrations or sounds, after a predetermined period of time from a keystroke, which correspond to the respective position value, so that the present position of the information pieces of the group is recognized based on the vibration or sound type.

## Patentansprüche

1. System zum Unterstützen einer Eingabebestätigung in einem mobilen Endgerät, dem Information unter Verwendung mehrerer Tasten zugeführt wird, wobei das System aufweist:
eine Informationsspeichereinheit (112A - 112E) zum Speichern verschiedener Gruppen von Informationselementen, wobei die Gruppen den mehreren Tasten zugeordnet sind;
wobei die Informationselemente jeder Gruppe bei jeder Betätigung der entsprechenden Taste unter den mehreren Tasten innerhalb der Gruppe auf eine zyklische Weise sequenziell geändert werden, wodurch ein Basispositionswert bei jeder Betätigung der entsprechenden Taste auf eine zyklische Weise geändert wird;
eine Informationsbasispositionsspeichereinheit (112B - 112E) zum Speichern des Basispositionswertes zum Identifizieren der in der Informationsspeichereinheit (112A - 112E) gespeicherten Informationselemente der jeweiligen Gruppen;
eine Eingabebestätigungsunterstützungseinheit (111A) zum Lesen des einem Eingabeinformationselement entsprechenden Positionswertes und zum Veranlassen, dass eine Reaktionseinheit (119, 120, 122, 123) eine dem gelesenen Positionswert entsprechende Reaktion ausführt;
**dadurch gekennzeichnet, dass**
die Reaktionseinheit dazu geeignet ist, nach einer bezüglich einer Tastenbetätigung verstrichenen vorgegebenen Zeitdauer verschiedene vorgegebene Typen von Vibrationen oder Tönen zu erzeugen, die dem jeweiligen Positionswert entsprechen, so dass die aktuelle Position der Informationselemente der Gruppe basierend auf dem Vibrations- oder Tontyp erkennbar ist.

2. System nach Anspruch 1, **dadurch gekennzeichnet, dass:**
die Informationsspeichereinheit eine Zeichenspeichereinheit (112A) zum Speichern von Gruppen japanischer Hiragana-Zeichen aufweist, wobei den Gruppen Tasten "0" bis "9" zugeordnet sind, wobei jedes Zeichen in Verbindung mit der Betätigung der entsprechenden Taste eingegeben wird, wobei das Zeichen jeder Gruppe bei jeder Betätigung der entsprechenden Taste auf eine zyklische Weise sequenziell geändert wird, wobei bei jeder Betätigung einer ersten repräsentativen Taste ("Ruf"taste) die Größe des Zeichens zwischen einer Version voller Größe und einer kleinen Version geändert wird, insofern die Größe des Zeichens änderbar ist, und wobei die Hinzufügung eines japanischen diakritischen Symbols (Dakuten-Symbol oder Handakuten-Symbol) zum Zeichen bei jeder Betätigung einer zweiten repräsentativen Taste ("#"-Taste) geändert wird, insofern die Hinzufügung des diakritischen Symbols zum Zeichen zulässig ist;
die Informationsbasispositionsspeichereinheit (112B-112E) aufweist:
eine Zeichenbasispositionsspeichereinheit (112C) zum Speichern von Positionswerten 0 bis 4 zum Identifizieren der in der Zeichenspeichereinheit gespeicherten Hiragana-Zeichen jeder Gruppe;
eine Zeichengrößenpositionsspeichereinheit (112D) zum Speichern von Positionswerten 0 bis 2, wobei die Größe jedes Hiragana-Zeichens identifiziert wird basierend auf dem Positionswert 0, der anzeigt, dass das Zeichen von der Änderung zwischen der Version voller Größe und der kleinen Version unabhängig ist, dem Positionswert 1, der anzeigt, dass das Zeichen auf die kleine Version änderbar ist, oder dem Positionswert 2, der anzeigt, dass das Zeichen auf die Version voller Größe änderbar ist; und
eine Positionsspeichereinheit (112E) für diakritische Symbole zum Speichern von Positionswerten 0 bis 2, wobei die Hinzufügung des Dakuten-Symbols oder des Handakuten-Symbols zu jedem Hiragana-Zeichen identifiziert wird basierend auf dem Positionswert 0, der anzeigt, dass das Zeichen von der Hinzufügung des Dakuten-Symbols und des Handakuten-Symbols unabhängig ist, dem Positionswert 1, der anzeigt, dass die Hinzufügung des Dakuten-Symbols zum Zeichen zulässig ist, oder des Positionswertes 2, der anzeigt, dass die Hinzufügung des Handakuten-Symbols zum Zeichen zulässig ist;
wobei die Eingabebestätigungsunterstützungseinrichtung (111A, 119, 120) einen einer Eingabezeicheninformation entsprechenden Positionswert von der Zeichenbasispositionsspeichereinheit (112C), der Zeichengrößenpositionsspeichereinheit (112D) oder der Positionsspeichereinheit (112E) für diakritische Symbole ausliest und eine Vibrationseinheit (120) veranlasst, als Reaktion Vibrationen in einer dem Positionswert entsprechenden Anzahl zu erzeugen, wenn eine unter den Tasten "0" bis "9" , der ersten repräsentativen Taste und der zweiten repräsentativen Taste betätigt wird, um Hiragana-Zeicheneingabeinformation, Zeichengrößenänderungsinformation oder mit der Hinzufügung des Dakuten-Symbols oder des Handakuten-Symbols in Beziehung stehende Änderungsinformation einzugeben.

3. System nach Anspruch 1, **dadurch gekennzeichnet, dass:**
die Informationsspeichereinheit eine Zeichenspeichereinheit (112A) zum Speichern von Gruppen japanischer Katakana-Zeichen aufweist, wobei den Gruppen die Tasten "0" bis "9" zugeordnet sind, wobei jedes Zeichen in Verbindung mit der Betätigung der entsprechenden Taste eingegeben wird, wobei die Zeichen jeder Gruppe bei jeder Betätigung der entsprechenden Taste sequenziell geändert werden, die Größe des Zeichens bei jeder Betätigung einer ersten repräsentativen Taste ("Ruf"taste) zwischen einer Version voller Größe und einer kleinen Version geändert wird, insofern die Größe des Zeichens änderbar ist, und die Hinzufügung eines japanischen diakritischen Symbols (Dakuten-Symbol oder Handakuten-Symbol) zum Zeichen bei jeder Betätigung einer zweiten repräsentativen Taste ("#"-Taste) geändert wird, insofern die Hinzufügung des diakritischen Symbols zulässig ist;
die Informationsbasispositionsspeichereinheit (112B - 112E) aufweist:
eine Zeichenbasispositionsspeichereinheit (112C) zum Speichern von Positionswerten 0 bis 4 zum Identifizieren der in der Zeichenspeichereinheit gespeicherten Katakana-Zeichen jeder Gruppe;
eine Zeichengrößenpositionsspeichereinheit (112D) zum Speichern von Positionswerten 0 bis 2, wobei die Größe jedes Katakana-Zeichens identifiziert wird basierend auf dem Positionswert 0, der anzeigt, dass das Zeichen von der Änderung zwischen der Version voller Größe und der kleinen Version unabhängig ist, dem Positionswert 1, der anzeigt, dass das Zeichen auf die kleine Version änderbar ist, oder dem Positionswert 2, der anzeigt, dass das Zeichen auf die Version voller Größe änderbar ist; und
eine Positionsspeichereinheit (112E) für diakritische Symbole zum Speichern von Positionswerten 0 bis 2, wobei die Hinzufügung des Dakuten-Symbols oder des Handakuten-Symbols zu jedem Katakana-Zeichen identifiziert wird basierend auf dem Positionswert 0, der anzeigt, dass das Zeichen von der Hinzufügung des Dakuten-Symbols und des Handakuten-Symbols unabhängig ist, dem Positionswert 1, der anzeigt, dass die Hinzufügung des Dakuten-Symbol zum Zeichen zulässig ist, oder dem Positionswert 2, der anzeigt, dass die Hinzufügung des Handakuten-Symbols zum Zeichen zulässig ist; und
die Eingabebestätigungsunterstützungseinrichtung (111A, 119, 120) einen der Eingabezeicheninformation entsprechenden Positionswert von der Zeichenbasispositionsspeichereinheit (112C), der Zeichengrößenpositionsspeichererinheit (112D) oder der Positionsspeichereinheit (112E) für diakritische Symbole ausliest und die Vibrationseinheit (120) veranlasst, als Reaktion Vibrationen in einer dem Positionswert entsprechenden Anzahl zu erzeugen, wenn eine Taste unter den Tasten "0" bis "9", der ersten repräsentativen Taste und der zweiten repräsentativen Taste betätigt wird, um Katakana-Zeicheneingabeinformation, Zeichengrößenänderungsinformation oder mit der Hinzufügung des Dakuten-Symbols oder des Handakuten-Symbols in Beziehung stehende Änderungsinformation einzugeben.

4. System nach Anspruch 1, **dadurch gekennzeichnet, dass**
die Informationsspeichereinheit eine Zeichenspeichereinheit (112A) zum Speichern von Buchstabengruppen des Alphabets aufweist, wobei jede Gruppe aus drei oder vier alphabetischen Zeichen besteht, wobei den Gruppen die Tasten "0" bis "9" zugeordnet sind, wobei jedes Zeichen in Verbindung mit der Betätigung der entsprechenden Taste eingegeben wird, wobei das Zeichen jeder Gruppe bei jeder Betätigung der entsprechenden Taste sequenziell zyklisch geändert wird, und wobei die Größe des Zeichens bei jeder Betätigung einer ersten repräsentativen Taste ("Ruf"taste) zwischen Groß- und Kleinschreibung geändert wird;
wobei die Informationsbasisspeichereinheit (112B - 112E) aufweist:
eine Zeichenbasispositionsspeichereinheit zum Speichern von Positionswerten 0 bis 2 oder 0 bis 3 zum Identifizieren von drei oder vier Zeichen jeder Gruppe, die in der Zeichenspeichereinheit gespeichert sind; und
eine Zeichengrößenpositionsspeichereinheit (112D) zum Speichern von Positionswerten 1 und 2, wobei die Größe jedes Zeichens identifiziert wird basierend auf dem Positionswert 1, der anzeigt, dass das Zeichen auf Kleinschreibung änderbar ist, oder dem Positionswert 2, der anzeigt, dass das Zeichen auf Großschreibung änderbar ist;
wobei die Eingabebestätigungsunterstützungseinrichtung (111A, 119, 120) einen der Eingabezeicheninformation entsprechenden Positionswert von der Zeichenbasispositionsspeichereinheit (112C) oder der Zeichengrößenpositionsspeichereinheit (112D) liest und eine Vibrationseinheit (120) veranlasst, als Reaktion Vibrationen in einer dem Positionswert entsprechenden Anzahl zu erzeugen, wenn eine Taste unter den Tasten "0" bis "9" und der ersten repräsentativen Taste betätigt wird, um alphabetische Zeicheneingabeinformation oder Zeichengrößenänderungsinformation einzugeben.

5. System nach einem der Ansprüche 2 bis 4, wobei:
der Speicher (112) eine Skalierungsspeichereinheit (112K) zum Speichern von Skalierungstonhöhen aufweist, die den jeweiligen Tasten zugeordnet sind, die mit den Zeichen in der Zeichenspeichereinheit (112A) in Beziehung stehen; und
die Eingabebestätigungsunterstützungseinrichtung (111A, 122, 123) eine der Taste entsprechende Tonhöhe von der Skalierungsspeichereinheit (112K) ausliest und eine Audioeinheit (122, 123) veranlasst, einen Ton der entsprechenden Tonhöhe auszugeben.

6. System nach Anspruch 5, wobei die Tonhöhen den in der Zeilenrichtung oder in der Spaltenrichtung angeordneten Tasten in einer aufsteigenden oder abfallenden Skalierungsfolge zugeordnet sind.

7. System nach einem der Ansprüche 2 bis 4, wobei die Vibrationseinheit (119, 120) gemäß den Positionswerten 0, 1, 2, 3 und 4 keine Vibration, eine Vibration, zwei Vibrationen, drei Vibrationen bzw. vier Vibrationen erzeugt, oder gemäß den Positionswerten 0, 1, 2, 3 oder 4 eine Vibration, zwei Vibrationen, drei Vibrationen, vier Vibrationen bzw. fünf Vibrationen erzeugt.

8. System nach Anspruch 7, wobei ein Intervall zwischen den Vibrationen steuerbar ist.

9. System nach einem der Ansprüche 2 bis 8, wobei, wenn ein Intervall zwischen Tastenbetätigungen der gleichen Taste länger ist als eine vorgegebene Zeitdauer, die Vibrationseinheit Vibrationen in einer einem Positionswert entsprechenden Anzahl erzeugt.

10. System nach einem der Ansprüche 2 bis 4, wobei
das mobile Endgerät eine Audioeinheit aufweist;
an Stelle der Vibrationseinheit die Audioeinheit gemäß den Positionswerten 0, 1, 2, 3 und 4 Sprachmeldungen mit dem Inhalt "Positionswert null", "Positionswert eins", "Positionswert zwei", "Positionswert drei" bzw. "Positionswert vier" erzeugt; und
die Eingabebestätigungsunterstützungseinrichtung der Audioeinheit ermöglicht, eine einem Positionswert entsprechende Sprachmeldung zu erzeugen.

11. System nach Anspruch 1, wobei:
die Informationsspeichereinheit eine Zeichenspeichereinheit (112A) aufweist zum Speichern von
Gruppen japanischer Hiragana-Zeichen und Gruppen japanischer Katakana-Zeichen, wobei den Gruppen der Hiragana- und der Katakana-Zeichen jeweils Tasten "0" bis "9" zugeordnet sind, wobei jedes Zeichen in Verbindung mit der Betätigung der entsprechenden Taste eingegeben wird, wobei das Zeichen jeder Gruppe bei jeder Betätigung der entsprechenden Taste auf eine zyklische Weise sequenziell geändert wird, wobei bei jeder Betätigung einer ersten repräsentativen Taste ("Ruf"taste) die Größe des Zeichens zwischen einer Version voller Größe und einer kleinen Version geändert wird, insofern die Größe des Zeichens änderbar ist, und wobei die Hinzufügung eines japanischen diakritischen Symbols (Dakuten-Symbol oder Handakuten-Symbol) zum Zeichen bei jeder Betätigung einer zweiten repräsentativen Taste ("#"-Taste) geändert wird, insofern die Hinzufügung des diakritischen Symbols zum Zeichen zulässig ist;
Gruppen von Buchstaben des Alphabets, wobei jede Gruppe aus drei oder vier alphabetischen Zeichen besteht, wobei den Gruppen die Tasten "0" bis "9" zugeordnet sind, wobei jedes Zeichen in Verbindung mit der Betätigung der entsprechenden Taste eingegeben wird,
wobei das Zeichen jeder Gruppe bei jeder Betätigung der entsprechenden Taste auf eine zyklische Weise sequenziell geändert wird, und wobei jedes Zeichen bei jeder Betätigung der ersten repräsentativen Taste zwischen Großschreibung und Kleinschreibung geändert wird;
Nummern "0" bis "9", die den Tasten "0" bis "9" zugeordnet sind, wobei jede Nummer in Verbindung mit der Betätigung der entsprechenden Taste eingegeben wird; und
fünf Symbole, die der dritten repräsentativen Taste zugeordnet sind, wobei jedes Symbol in Verbindung mit der Betätigung einer dritten repräsentativen Taste ("*"-Taste) eingegeben wird, wobei das Symbol bei jeder Betätigung der dritten repräsentativen Taste auf eine zyklische Weise sequenziell geändert wird;
die Informationsbasispositionsspeichereinheit (112B - 112E) aufweist:
eine Zeichenbasispositionsspeichereinheit zum Speichern von Positionswerten 0 bis 4 zum Identifizieren der Hiragana- und Katakana-Zeichen jeder Gruppe und der fünf Symbole, Positionswerten 0 bis 2 oder 0 bis 3 zum Identifizieren von drei oder vier alphabetischen Zeichen jeder Gruppe und eines Positionswertes 0 zum Identifizieren der Nummern, der Hiragana-Zeichen, der Katakana-Zeichen, der alphabetischen Zeichen, der Symbole und der Nummern, die in der Zeichenspeichereinheit gespeichert sind;
eine Zeichengrößenpositionsspeichereinheit (112D) zum Speichern von Positionswerten 0 bis 2, wobei die Größe jedes Zeichens identifiziert wird basierend auf dem Positionswert 0, der anzeigt, dass das Hiragana- oder Katakana-Zeichen von der Änderung zwischen der Version voller Größe und der kleinen Version unabhängig ist, dem Positionswert 1, der anzeigt, dass das Zeichen auf die kleine Version (Kleinschreibung) änderbar ist, oder dem Positionswert 2, der anzeigt, dass das Zeichen auf die Version voller Größe (Großschreibung) änderbar ist; und
eine Positionsspeichereinheit (112E) für diakritische Symbole zum Speichern von Positionswerten 0 bis 2, wobei die Hinzufügung des Dakuten-Symbols oder des Handakuten-Symbols zu jedem Hiragana- oder Katakana-Zeichen identifiziert wird basierend auf dem Positionswert 0, der anzeigt, dass das Zeichen von der Hinzufügung des Dakuten-Symbols und des Handakuten-Symbols unabhängig ist, dem Positionswert 1, der anzeigt, dass die Hinzufügung des Dakuten-Symbols zum Zeichen zulässig ist, oder dem Positionswert 2, der anzeigt, dass die Hinzufügung des Handakuten-Symbols zum Zeichen zulässig ist;
wobei die Eingabebestätigungsunterstützungseinrichtung (111A) einen einer Eingabezeicheninformation entsprechenden Positionswert von der Zeichenbasispositionsspeichereinheit (112C), der Zeichengrößenpositionsspeichereinheit (112D) oder der Positionsspeichereinheit (112E) für diakritische Symbole ausliest und der Vibrationseinheit ermöglicht, als Reaktion Vibrationen in einer dem Positionswert entsprechenden Anzahl zu erzeugen, wenn eine Taste unter den Tasten "0" bis "9", der ersten repräsentativen Taste, der zweiten repräsentativen Taste und der dritten repräsentativen Taste betätigt wird, um Eingabeinformation eines Hiragana-Zeichens, eines Katakana-Zeichens oder eines alphabetischen Zeichens, eine Nummer oder ein Symbol, Zeichengrößenänderungsinformation oder mit der Hinzufügung des Dakuten-Symbols oder des Handakuten-Symbols in Beziehung stehende Änderungsinformation einzugeben.

12. System nach Anspruch 11, wobei:
die Zeichenspeichereinheit (112A) Informationsgruppen speichert, die mehreren Funktionstasten ("FUNCTION1-6"-Taste) zugeordnet sind, wobei jede Informationsgruppe mehrere Informationselemente aufweist, wobei jedes Informationselement in Verbindung mit der Betätigung der entsprechenden Funktionstaste eingegeben wird, wobei das Informationselement jeder Gruppe bei jeder Betätigung der entsprechenden Funktionstaste auf eine zyklische Weise sequenziell geändert wird, und wobei die Informationsgruppen eine Gruppe von Routinemeldungen, eine Gruppe von Gesichtssymbolen, eine Gruppe von Bildsymbolen, eine Gruppe beigefügter Bilder und eine Gruppe beigefügter Töne aufweisen;
der Speicher eine Informationspositionsspeichereinheit (112F - 112J) aufweist, die Positionswerte 0 bis 4 zum Identifizieren der Informationselemente speichert, die die Routinemeldungen, die Gesichtssymbole, die Bildsymbole, die beigefügten Bilder und die beigefügten Töne aufweisen; und
die Eingabebestätigungsunterstützungseinrichtung (111A) einen Positionswert von der Informationspositionsspeichereinheit ausliest und der Vibrationseinheit ermöglicht, gemäß dem Positionswert eine Vibration zu erzeugen.

13. System nach Anspruch 11, wobei:
die Informationsspeichereinheit Zeicheneingabemodi speichert, die einer vierten repräsentativen Taste ("Einschalt"-Taste) zugeordnet sind, wobei die Zeicheneingabemodi einen Hiragana-Eingabemodus, einen Katakana-Eingabemodus, einen alphabetischen Eingabemodus und einen Nummerneingabemodus aufweisen, wobei jeder Zeicheneingabemodus in Verbindung mit der Betätigung der vierten repräsentativen Taste eingegeben wird, wobei der Modus bei jeder Betätigung der vierten repräsentativen Taste auf eine zyklische Weise sequenziell geändert wird;
die Informationsbasispositionseinheit (112B - 112E) eine Zeicheneingabemoduspositionsspeichereinheit (112B) zum Speichern von Positionswerten 0 bis 3 zum Identifizieren des Hiragana-Eingabemodus, des Katakana-Eingabemodus, des alphabetischen Eingabemodus bzw. des Nummerneingabemodus aufweist; und
die Eingabebestätigungsunterstützungseinrichtung (111A) einen Eingabezeicheninformation entsprechenden Positionswert von der Zeicheneingabemoduspositionsspeichereinheit ausliest und der Vibrationseinheit (119, 120) ermöglicht, als Reaktion Vibrationen in einer dem Positionswert entsprechenden Anzahl zu erzeugen, wenn die vierte repräsentative Taste betätigt wird, um Zeicheneingabemodusänderungsinformation einzugeben.

14. Verfahren zum Unterstützen einer Eingabebestätigung in einem mobilen Endgerät (100), dem Information unter Verwendung mehrerer Tasten (116) zugeführt wird, wobei das mobile Endgerät aufweist:
eine Informationsspeichereinheit (112A - 112E) zum Speichern verschiedener Gruppen von Informationselementen, wobei die Gruppen den mehreren Tasten zugeordnet sind;
wobei das Verfahren die Schritte aufweist:
Ändern der Informationselemente jeder Gruppe innerhalb der Gruppe auf eine zyklische Weise bei jeder Betätigung der entsprechenden Taste unter den mehreren Tasten, um einen Basispositionswert bei jeder Betätigung der entsprechenden Taste auf eine zyklische Weise zu ändern;
Speichern des Basispositionswertes zum Identifizieren des in der Informationsspeichereinheit (112A - 112E) gespeicherten Informationselements der jeweiligen Gruppe in einer Informationsbasispositionsspeichereinheit (112B - 112E); und
Auslesen des einem Eingabeinformationselement entsprechenden Positionswertes durch eine Eingabebestätigungsunterstützungseinheit (111A) und Ermöglichen, dass eine Reaktionseinheit (119, 120, 122, 123) eine dem gelesenen Positionswert entsprechende Reaktion ausführt;
**gekennzeichnet durch**
Ausführen verschiedener vorgegebener Typen von Vibrationen oder Tönen nach einer bezüglich einer Tastenbetätigung verstrichenen vorgegebenen Zeitdauer, die dem jeweiligen Positionswert entsprechen, so dass die aktuelle Position der Informationselemente der Gruppe basierend auf dem Vibrations- oder Tontyp erkennbar ist.

## Revendications

1. Système destiné à prendre en charge une confirmation d'entrée dans un dispositif terminal mobile dans lequel des informations sont entrées en utilisant une pluralité de touches, le système comportant :
une unité de stockage d'informations (112A - 112E) pour stocker de multiples groupes de parties d'informations, les groupes étant assignés à la pluralité de touches, respectivement,
les parties d'informations de chaque groupe étant séquentiellement modifiées dans ledit groupe d'une manière cyclique à chaque pression sur la touche correspondante de ladite pluralité de touches, ce qui modifie par conséquent une valeur de position de base d'une manière cyclique à chaque pression sur la touche correspondante ;
une unité de stockage de positions de base d'informations (112B - 112E) pour stocker la valeur de positions de base pour identifier les parties d'informations des groupes respectifs stockés dans l'unité de stockage d'informations (112A - 112E) ; et
une unité de prise en charge de confirmation d'entrée (111A) pour lire ladite valeur de position correspondant à une partie d'informations d'entrée et pour permettre à une unité de réaction (119, 120, 122, 123) de mettre en oeuvre des réactions correspondant à la valeur de position lue
**caractérisé en ce que**
l'unité de réaction est apte à mettre en oeuvre différents types prédéterminés de vibrations ou de sons, postérieurement à une période de temps prédéterminée, à partir d'une frappe de touches, lesquels correspondent à la valeur de position respective, de sorte que la position en cours des parties d'informations du groupe est reconnue sur la base du type de son ou de vibration.

2. Système selon la revendication 1, étant **caractérisé en ce que :**
l'unité de stockage d'informations comporte une unité de stockage de caractères (112A) pour stocker des groupes de caractères de syllabaire « hiragana » japonais, les groupes étant assignés à des touches allant de « 0 » à « 9 », respectivement, chaque caractère étant entré en association avec la pression sur la touche correspondante, le caractère de chaque groupe étant séquentiellement modifié d'une manière cyclique à chaque pression sur la touche correspondante, la taille du caractère étant modifiée entre des versions de pleine taille et de taille réduite à chaque pression sur une première touche représentative (touche « appel ») à condition que la taille du caractère soit modifiable, l'ajout d'un signe diacritique japonais (le point sonore « dakuten » ou le point semi-sonore « handakuten ») au caractère étant modifié à chaque pression sur une deuxième touche représentative (touche « # ») à condition que l'ajout du signe diacritique au caractère soit permis ;
l'unité de stockage de positions de base d'informations (112B - 112E) comporte
une unité de stockage de positions de base de caractères (112C) pour stocker des valeurs de position allant de 0 à 4 pour identifier les caractères de syllabaire « hiragana » de chaque groupe stocké dans l'unité de stockage de caractères,
une unité de stockage de positions de tailles de caractères (112D) pour stocker des valeurs de position allant de 0 à 2, la taille de chaque caractère de syllabaire « hiragana » étant identifiée sur la base de la valeur de position 0 indiquant que le caractère est indépendant de la modification entre les versions de pleine taille et de taille réduite, la valeur de position 1 indiquant que le caractère est modifiable à la version de taille réduite, ou la valeur de position 2 indiquant que le caractère est modifiable à la version de pleine taille, et
une unité de stockage de positions de marques diacritiques (112E) pour stocker des valeurs de position allant de 0 à 2, l'ajout du point sonore « dakuten » ou du point semi-sonore « handakuten » à chaque caractère de syllabaire « hiragana » étant identifié sur la base de la valeur de position 0 indiquant que le caractère est indépendant de l'ajout du point sonore « dakuten » et du point semi-sonore « handakuten », la valeur de position 1 indiquant que l'ajout du point sonore « dakuten » au caractère est permis, ou la valeur de position 2 indiquant que l'ajout du point semi-sonore « handakuten » au caractère est permis ; et
le moyen de prise en charge de confirmation d'entrée (111A, 119, 120) lit une valeur de position correspondant à des informations de caractère d'entrée à partir de l'unité de stockage de positions de base de caractères (112C), de l'unité de stockage de positions de tailles de caractères (112D), ou de l'unité de stockage de positions de marques diacritiques (112E) et permet à une unité de vibration (120) de générer une vibration en réaction au nombre d'occurrences correspondant à la valeur de position lorsque l'une quelconque des touches allant de « 0 » à « 9 », de la première touche représentative, et de la deuxième touche représentative est actionnée pour entrer des informations d'entrée de caractère de syllabaire «hiragana», des informations de modification de taille de caractère, ou des informations de modification concernant l'ajout du point sonore « dakuten » ou du point semi-sonore « handakuten ».

3. Système selon la revendication 1, étant **caractérisé en ce que :**
l'unité de stockage d'informations comporte une unité de stockage de caractères (112A) pour stocker des groupes de caractères de syllabaire « katakana » japonais, les groupes étant assignés à des touches allant de « 0 » à « 9 », respectivement, chaque caractère étant entré en association avec la pression sur la touche correspondante, le caractère de chaque groupe étant séquentiellement modifié d'une manière cyclique à chaque pression sur la touche correspondante, la taille du caractère étant modifiée entre des versions de pleine taille et de taille réduite à chaque pression sur une première touche représentative (touche « appel ») à condition que la taille du caractère soit modifiable, l'ajout d'un signe diacritique japonais (le point sonore « dakuten » ou le point semi-sonore « handakuten ») au caractère étant modifié à chaque pression sur une deuxième touche représentative (touche « # ») à condition que l'ajout du signe diacritique au caractère soit permis ;
l'unité de stockage de positions de base d'informations (112B - 112E) comporte
une unité de stockage de positions de base de caractères (112C) pour stocker des valeurs de position allant de 0 à 4 pour identifier les caractères de syllabaire « katakana » de chaque groupe stocké dans l'unité de stockage de caractères ;
une unité de stockage de positions de tailles de caractères (112D) pour stocker des valeurs de position allant de 0 à 2, la taille de chaque caractère de syllabaire « katakana » étant identifiée sur la base de la valeur de position 0 indiquant que le caractère est indépendant de la modification entre les versions de pleine taille et de taille réduite, la valeur de position 1 indiquant que le caractère est modifiable à la version de taille réduite, ou la valeur de position 2 indiquant que le caractère est modifiable à la version de pleine taille, et
une unité de stockage de positions de marques diacritiques (112E) pour stocker des valeurs de position allant de 0 à 2, l'ajout du point sonore « dakuten » ou du point semi-sonore « handakuten » à chaque caractère de syllabaire « katakana » étant identifié sur la base de la valeur de position 0 indiquant que le caractère est indépendant de l'ajout du point sonore « dakuten » et du point semi-sonore « handakuten », la valeur de position 1 indiquant que l'ajout du point sonore « dakuten » au caractère est permis, ou la valeur de position 2 indiquant que l'ajout du point semi-sonore « handakuten » au caractère est permis ; et
le moyen de prise en charge de confirmation d'entrée (111A, 119, 120) lit une valeur de position correspondant à des informations de caractère d'entrée, à partir de l'unité de stockage de positions de base de caractères (112C), de l'unité de stockage de positions de tailles de caractères (112D), ou de l'unité de stockage de positions de marques diacritiques (112E) et permet à une unité de vibration (120) de générer une vibration en réaction au nombre d'occurrences correspondant à la valeur de position lorsque l'une quelconque des touches allant de « 0 » à « 9 », de la première touche représentative, et de la deuxième touche représentative est actionnée pour entrer des informations d'entrée de caractère de syllabaire « katakana », des informations de modification de taille de caractère, ou des informations de modification concernant l'ajout du point sonore « dakuten » ou du point semi-sonore « handakuten ».

4. Système selon la revendication 1 étant **caractérisé en ce que :**
l'unité de stockage d'informations comporte une unité de stockage de caractères (112A) pour stocker des groupes de lettres de l'alphabet, chaque groupe comportant trois ou quatre caractères alphabétiques, les groupes étant assignés à des touches allant de « 0 » à « 9 », respectivement, chaque caractère étant entré en association avec la pression sur la touche correspondante, le caractère de chaque groupe étant séquentiellement modifié d'une manière cyclique à chaque pression sur la touche correspondante, la taille du caractère étant modifiée entre des lettres en majuscule et des lettres en minuscule à chaque pression sur une première touche représentative (touche « appel ») ;
l'unité de stockage de positions de base d'informations (112B - 112E) comporte
une unité de stockage de positions de base de caractères pour stocker des valeurs de position allant de 0 à 2 ou de 0 à 3 pour identifier trois ou quatre caractères de chaque groupe stockés dans l'unité de stockage de caractères,
une unité de stockage de positions de tailles de caractères (112D) pour stocker des valeurs de position 1 et 2, la taille de chaque caractère étant identifiée sur la base de la valeur de position 1 indiquant que le caractère est modifiable en la lettre en minuscule ou de la valeur de position 2 indiquant que le caractère est modifiable en la lettre en majuscule ; et le moyen de prise en charge de confirmation d'entrée (111A, 119, 120) lit une valeur de position correspondant à des informations de caractère d'entrée à partir de l'unité de stockage de positions de base de caractères (112C) ou de l'unité de stockage de positions de tailles de caractères (112D) et permet à une unité de vibration (120) de générer une vibration en réaction au nombre d'occurrences correspondant à la valeur de position lorsque l'une quelconque des touches allant de « 0 » à « 9 » et de la première touche représentative est actionnée pour entrer des informations d'entrée de caractère alphabétique ou des informations de modification de taille de caractère.

5. Système selon l'une quelconque des revendications 2 à 4, dans lequel :
la mémoire (112) comporte une unité de stockage d'échelles (112K) pour stocker des remarques d'échelle assignées aux touches respectives relatives aux caractères dans l'unité de stockage de caractères (112A), et
le moyen de prise en charge de confirmation d'entrée (111A, 122, 123) lit une remarque correspondant à la touche à partir de l'unité de stockage d'échelles (112K) et permet à une unité audio (122, 123) de générer en sortie un son de la remarque correspondante.

6. Système selon la revendication 5, dans lequel les remarques sont séquentiellement assignées aux touches agencées dans la direction de rangée ou dans la direction de colonne dans l'ordre ascendant ou descendant de l'échelle.

7. Système selon l'une quelconque des revendications 2 à 4, dans lequel l'unité de vibration (119, 120) ne génère aucune vibration, génère une vibration, deux vibrations, trois vibrations, et quatre vibrations selon les valeurs de position 0, 1, 2, 3, et 4, respectivement, or génère une vibration, deux vibrations, trois vibrations, quatre vibrations, et cinq vibrations selon les valeurs de position 0, 1, 2, 3, ou 4, respectivement.

8. Système selon la revendication 7, dans lequel un intervalle entre les vibrations est contrôlable.

9. Système selon l'une quelconque des revendications 2 à 8, dans lequel lorsqu'un intervalle entre des frappes de touches sur la même touche est plus long qu'une période de temps prédéterminée, l'unité de vibration génère un nombre de vibrations égal au nombre d'occurrences correspondant à une valeur de position.

10. Système selon l'une quelconque des revendications 2 à 4, dans lequel
le dispositif terminal mobile comporte une unité audio,
à la place de l'unité de vibration, l'unité audio génère des messages vocaux de type « valeur de position zéro », « valeur de position un », « valeur de position deux », « valeur de position trois », et « valeur de position quatre » selon les valeurs de position 0, 1, 2, 3, et 4, respectivement, et
le moyen de prise en charge de confirmation d'entrée permet à l'unité audio de générer un message vocal correspondant à une valeur de position.

11. Système selon la revendication 1 dans lequel :
l'unité de stockage d'informations comporte une unité de stockage de caractères (112A) pour stocker
des groupes de caractères de syllabaire « hiragana » japonais et des groupes de caractères de syllabaire « katakana » japonais, les groupes de chacun des caractères de syllabaire « hiragana » et « katakana » étant assignés à des touches allant de « 0 » à « 9 », respectivement, chaque caractère étant entré en association avec la pression sur la touche correspondante, le caractère de chaque groupe étant séquentiellement modifié d'une manière cyclique à chaque pression sur la touche correspondante, la taille du caractère étant modifiée entre des versions de pleine taille et de taille réduite à chaque pression sur une première touche représentative (touche « appel ») à condition que la taille du caractère soit modifiable, l'ajout d'un signe diacritique japonais (le point sonore « dakuten » ou le point semi-sonore « handakuten ») au caractère étant modifié à chaque pression sur une deuxième touche représentative (touche « # ») à condition que l'ajout du signe diacritique au caractère soit permis,
des groupes de lettres de l'alphabet, chaque groupe comportant trois ou quatre caractères alphabétiques, les groupes étant assignés aux touches allant de « 0 » à « 9 », respectivement, chaque caractère étant entré en association avec la pression sur la touche correspondante, le caractère de chaque groupe étant séquentiellement modifié d'une manière cyclique à chaque pression sur la touche correspondante, chaque caractère étant modifié entre des lettres en majuscule et des lettres en minuscule à chaque pression sur la première touche représentative,
des caractères numériques de « 0 » à « 9 » assignés aux touches allant de « 0 » à « 9 », respectivement, chaque caractère numérique étant entré en association avec la pression sur la touche correspondante, et
cinq symboles assignés à la troisième touche représentative, chaque symbole étant entré en association avec la pression sur une troisième touche représentative (touche « * »), le symbole étant séquentiellement modifié d'une manière cyclique à chaque pression sur la troisième touche représentative ;
l'unité de stockage de positions de base d'informations (112B - 112E) comporte une unité de stockage de positions de base de caractères pour stocker des valeurs de position allant de 0 à 4 pour identifier les caractères de syllabaire « hiragana » et « katakana » de chaque groupe et les cinq symboles, des valeurs de position 0 à 2 ou 0 à 3 pour identifier trois ou quatre caractères alphabétiques de chaque groupe, et une valeur de position 0 pour identifier les caractères numériques, les caractères de syllabaire « hiragana » et « katakana », et les caractères alphabétiques, les symboles, et les caractères numériques étant stockés dans l'unité de stockage de caractères,
une unité de stockage de positions de tailles de caractères (112D) pour stocker des valeurs de position allant de 0 à 2, la taille de chaque caractère étant identifiée sur la base de la valeur de position 0 indiquant que le caractère de syllabaire « hiragana » ou « katakana » est indépendant de la modification entre les versions de pleine taille et de taille réduite, la valeur de position 1 indiquant que le caractère est modifiable à la version de taille réduite (minuscule), ou la valeur de position 2 indiquant que le caractère est modifiable à la version de pleine taille (majuscule), et
une unité de stockage de positions de marques diacritiques (112E) pour stocker des valeurs de position allant de 0 à 2, l'ajout du point sonore « dakuten » ou du point semi-sonore « handakuten » à chaque caractère de syllabaire « hiragana » ou « katakana » étant identifié sur la base de la valeur de position 0 indiquant que le caractère est indépendant de l'ajout du point sonore « dakuten » et du point semi-sonore « handakuten », la valeur de position 1 indiquant que l'ajout du point sonore « dakuten » au caractère est permis, ou la valeur de position 2 indiquant que l'ajout du point semi-sonore « handakuten » au caractère est permis ; et
le moyen de prise en charge de confirmation d'entrée (111A) lit une valeur de position correspondant à des informations de caractère d'entrée à partir de l'unité de stockage de positions de base de caractères (112C), de l'unité de stockage de positions de tailles de caractères (112D), ou de l'unité de stockage de positions de marques diacritiques (112E) et permet à une unité de vibration de générer une vibration en réaction au nombre d'occurrences correspondant à la valeur de position lorsque l'une quelconque des touches allant de « 0 » à « 9 », de la première touche représentative, de la deuxième touche représentative, et de la troisième touche représentative est actionnée pour entrer des informations d'entrée d'un caractère de syllabaire « hiragana », « katakana », ou d'un caractère alphabétique, d'un caractère numérique, ou d'un symbole, des informations de modification de taille de caractère, ou des informations de modification concernant l'ajout du point sonore « dakuten » ou du point semi-sonore « handakuten ».

12. Système selon la revendication 11, dans lequel :
l'unité de stockage de caractères (112A) stocke des groupes d'informations assignés à une pluralité de touches de fonction (touche « FUNCTION 1 - 6 » (*FONCTION 1 à 6*)), respectivement, chaque groupe d'informations comportant une pluralité de parties d'informations, chaque partie d'informations étant entrée en association avec la pression sur la touche de fonction correspondante, la partie d'informations de chaque groupe étant séquentiellement modifiée d'une manière cyclique à chaque pression sur la touche de fonction correspondante, les groupes d'informations comportant un groupe de messages de routine, un groupe de marques de face, un groupe de symboles graphiques, un groupe d'images jointes, et un groupe de sons joints,
la mémoire comporte une unité de stockage de positions d'informations (112F - 112J) qui stocke des valeurs de position 0 à 4 pour identifier les parties d'informations comportant les messages de routine, les marques de face, les symboles graphiques, les images jointes, et les sons joints, et
le moyen de prise en charge de confirmation d'entrée (111A) lit une valeur de position à partir de l'unité de stockage de positions d'informations et permet à l'unité de vibration de générer une vibration selon la valeur de position.

13. Système selon la revendication 11, dans lequel :
l'unité de stockage d'informations stocke des modes d'entrée de caractères assignés à une quatrième touche représentative (touche « Power » (*Alimentation*)), les modes d'entrée de caractères comportant un mode d'entrée de caractères de syllabaire « hiragana », un mode d'entrée de caractères de syllabaire « katakana », un mode d'entrée de caractères alphabétiques, et un mode d'entrée de caractères numériques, chaque mode d'entrée de caractères étant entré en association avec la pression sur la quatrième touche représentative, le mode étant séquentiellement modifié d'une manière cyclique à chaque pression sur la quatrième touche représentative,
l'unité de position de base d'informations (112B - 112E) comporte une unité de stockage de positions de modes d'entrée de caractères (112B) pour stocker des valeurs de position allant de 0 à 3 pour identifier le mode d'entrée de caractères de syllabaire « hiragana », le mode d'entrée de caractères de syllabaire « katakana », le mode d'entrée de caractères alphabétiques, et le mode d'entrée de caractères numériques, respectivement, et
le moyen de prise en charge de confirmation d'entrée (111A) lit une valeur de position correspondant à des informations de caractère d'entrée à partir de l'unité de stockage de positions de modes d'entrée de caractères, et permet à l'unité de vibration (119, 120) de générer une vibration en réaction au nombre d'occurrences correspondant à la valeur de position lorsque la quatrième touche représentative est actionnée pour entrer des informations de changement de mode d'entrée de caractères.

14. Procédé destiné à prendre en charge une confirmation d'entrée dans un dispositif terminal mobile (100) dans lequel des informations sont entrées en utilisant une pluralité de touches (116), le dispositif terminal mobile comportant :
une unité de stockage d'informations (112A - 112E) pour stocker de multiples groupes de parties d'informations, les groupes étant assignés à la pluralité de touches, respectivement,
le procédé comportant les étapes ci-dessous consistant à :
modifier les parties d'informations de chaque groupe dans ledit groupe d'une manière cyclique à chaque pression sur la touche correspondante de ladite pluralité de touches, et modifier par conséquent une valeur de position de base d'une manière cyclique à chaque pression sur la touche correspondante ;
stocker la valeur de positions de base pour identifier la partie d'informations du groupe respectif stocké dans l'unité de stockage d'informations (112A - 112E) dans une unité de stockage de positions de base d'informations (112B - 112E) ; et
lire ladite valeur de position correspondant à une partie d'informations d'entrée au moyen d'une unité de prise en charge de confirmation d'entrée (111A) et permettre à une unité de réaction (119, 120, 122, 123) de mettre en oeuvre des réactions correspondant à la valeur de position lue,
**caractérisé par** l'étape consistant à
mettre en oeuvre différents types prédéterminés de vibrations ou de sons, postérieurement à une période de temps prédéterminée, à partir d'une frappe de touches, lesquels correspondent à la valeur de position respective, de sorte que la position en cours des parties d'informations du groupe est reconnue sur la base du type de son ou de vibration.
